# EUROPÄISCHE PATENTSCHRIFT

(11) **EP 2 223 057 B1**
(45) Veröffentlichungstag und Bekanntmachung des Hinweises auf die Patenterteilung: **14.08.2019**
(21) Anmeldenummer: 08865231.8
(22) Anmeldetag: 12.12.2008
(51) Int. Cl.: G01F 1/84, G01N 11/16, G01N 9/00

(54) **MESSWANDLER VOM VIBRATIONSTYP**
TRANSDUCER OF VIBRATION TYPE
CONVERTISSEUR DE MESURE DU TYPE À VIBRATIONS

(30) Priorität: 20.12.2007 DE 102007062397
(43) Veröffentlichungstag der Anmeldung: 01.09.2010
(73) Patentinhaber: Endress+Hauser Flowtec AG, 4153 Reinach (CH)
(72) Erfinder: BITTO, Ennio, CH-4147 Aesch (CH); FUCHS, Michael, 79427 Eschbach (DE); RIEDER, Alfred, 84032 Landshut (DE); SCHÜTZE, Christian, CH-4055 Basel (CH); DRAHM, Wolfgang, 85435 Erding (DE); WIESMANN, Michael, 85356 Freising (DE)
(74) Vertreter: Andres, Angelika Maria
(86) Internationale Anmeldenummer: PCT/EP2008/067381
(87) Internationale Veröffentlichungsnummer: WO 2009/080553

(56) Entgegenhaltungen:
- EP-A- 0 685 712
- EP-A- 1 785 697
- EP-A- 1 985 975
- WO-A-2007/043996
- WO-A-2007/057385
- DE-A1- 19 856 688
- DE-A1-102005 054 855
- GB-A- 2 199 147
- US-A- 5 206 587
- US-A- 5 412 276
- US-B1- 6 359 359

## Beschreibung

Die Erfindung betrifft einen, insb. für eine Verwendung in einem Coriolis-Massedurchflußmesser geeigneten, Meßwandler vom Vibrationstyp mit wenigstens einem zumindest zeitweise vibrierenden Meßrohr zum Führen von zu messendem Medium, einem Gegenschwinger, der unter Bildung einer ersten Kopplungszone einlaßseitig am Meßrohr fixiert ist und der unter Bildung einer zweiten Kopplungszone auslaßseitig am Meßrohr fixiert ist, eine Erregeranordnung zum Antreiben zumindest des Meßrohrs sowie eine Sensoranordnung zum Erfassen von Schwingungen zumindest des Meßrohrs.

In der industriellen Meßtechnik werden, insb. im Zusammenhang mit der Regelung und Überwachung von automatisierten verfahrenstechnischen Prozessen, zur Ermittlung von charakteristischen Prozeßparametern, beispielsweise eines Massedurchflusses, einer Dichte, einer Viskosität etc., von in einer Rohrleitung strömenden Medien, beispielsweise von Flüssigkeiten und/oder Gasen, werden oftmals, insb. als Coriolis-Massedurchflußmesser ausgebildete, In-Line-Meßgeräte verwendet, die mittels eines Meßwandlers vom Vibrationstyp und einer daran angeschlossener Betriebs- und Auswerteelektronik, im strömenden Medium Kräfte, beispielsweise Corioliskräfte, induzieren und von diesen abgeleitet ein den wenigstens einen Parameter entsprechend repräsentierendes Meßsignal erzeugen. Derartige In-Line-Meßgeräte mit einem Meßwandler vom Vibrationstyp sind seit langem bekannt und haben sich gleichermaßen im industriellen Einsatz etabliert. Beispiele für solche Meßwandler, insb. auch deren Verwendung in Coriolis-Massedurchflußmessern, sind z.B. in der EP-A 317 340, US-A 47 38 144, der US-A 47 77 833, der US-A 48 23 614, der US-A 52 91 792, der US-A 53 98 554, der US-A 54 76 013, der US-A 56 02 345, der US-A 56 91 485, US-A 57 96 010, der US-A 57 96 012, der US-A 59 45 609, der US-A 59 79 246, der US-B 63 30 832, der US-B 63 97 685, der US-B 66 91 583, der US-B 68 40 109, der US-B 68 83 387, der US-B 70 77 014, US-B 70 17 424, der US-B 72 99 699, der US-A 2007/0186685, der US-A 2007/0151371, der US-A 2007/0151370, der US-A 2007/0119265, der US-A 2007/0119264, der WO-A 99 40 394, der WO-A 01 02 816 oder der WO-A 00 14 485 beschrieben. Jeder der darin gezeigten Meßwandler umfaßt wenigstens ein im wesentlichen gerades oder wenigstens ein gekrümmtes, im Betrieb vibrierendes Meßrohr zum Führen des Mediums, welches Meßrohr über ein einlaßseitig einmündendes Einlaßrohrstück und über ein auslaßseitig einmündendes Auslaßrohrstück mit der Rohrleitung kommuniziert.

Ferner umfaßt jeder der gezeigten Meßwandler jeweils wenigstens einen einstückigen oder mehrteilig ausgeführten, beispielsweise rohr-, kasten- oder plattenförmigen, Gegenschwinger, der unter Bildung einer ersten Kopplungszone einlaßseitig an das Meßrohr gekoppelt ist und der unter Bildung einer zweiten Kopplungszone auslaßseitig an das Meßrohr gekoppelt ist und der im Betrieb zumindest anteilige ebenfalls vibrieren gelassen wird. Bei den beispielsweise in der US-A 52 91 792, der US-A 57 96 010, der US-A 59 45 609, der US-B 70 77 014, der US-A 2007/0119264, der WO-A 01 02 816 oder auch der WO-A 99 40 394 gezeigten Meßwandler mit einem einzigen, im wesentlichen geraden Meßrohr sind letzteres und der Gegenschwinger, wie bei herkömmlichen, industrietauglichen Meßwandlern durchaus üblich, zueinander im wesentlichen koaxial ausgerichtet. Darüberhinaus ist bei marktgängigen Meßwandlern der vorgenannten Art auch der Gegenschwinger zumeist im wesentlichen rohrförmig und im wesentlichen gerade ausgebildet und zudem derart im Meßwandler angeordnet, daß das Meßrohr zumindest teilweise vom Gegenschwinger ummantelt ist und Meßrohr und Gegenschwinger im wesentlichen koaxial ausgerichtet sind. Als Materialien für solche Gegenschwinger kommen u.a. vergleichsweise kostengünstige Stahlsorten, wie etwa Baustahl oder Automatenstahl, zum Einsatz

Meßwandler der in Rede stehenden Art umfassen des weiteren eine Erregeranordnung, die das Meßrohr im Betrieb, angesteuert von einem entsprechend konditionierten elektrischen Treibersignal, mittels wenigstens eines darauf einwirkenden elektro-mechanischen, insb. elektro-dynamischen, Schwingungserregers zu Biegeschwingungen üblicherweise möglichst überwiegend oder ausschließlich in einer einzigen gedachten - im weiteren als Primär-Schwingungsebene bezeichneten - Rohrschwingungsebene anregt, die die beiden Kopplungszonen imaginär schneidet. Desweiteren weisen derartige Meßwandler eine Sensoranordnung mit, insb. elektro-dynamischen, Schwingungssensoren zum zumindest punktuellen Erfassen einlaßseitiger und auslaßseitiger Schwingungen des Meßrohrs und zum Erzeugen von vom Massedurchfluß beeinflußten elektrischen Sensorsignalen auf.

Die Erregeranordnung weist wenigstens einen elektrodynamischen und/oder differentiell auf Meßrohr und Gegenschwinger einwirkenden, Schwingungserreger auf, während die Sensoranordnung einen einlaßseitigen, zumeist ebenfalls elektrodynamischen, Schwingungssensor sowie einen dazu im wesentlichen baugleichen auslaßseitigen Schwingungssensor umfaßt. Bei markgängigen Meßwandlern mit einem Meßrohr und einem daran gekoppelten Gegenschwinger ist der Schwingungserreger üblicherweise mittels einer zumindest zeitweise von einem Strom durchflossene und zumindest zeitweise von einem Magnetfeld durchsetzte Spule sowie einen mit der wenigstens eine Spule wechselwirkenden, insb. in diese eintauchenden, als Anker dienenden eher länglichen, insb. stabförmig ausgebildten, Dauermagneten gebildet, der entsprechend am Meßrohr fixiert ist. Dauermagnet und Spule sind dabei üblicherweise so ausgerichtet, daß sie zueinander im wesentlichen koaxial verlaufen.

Zudem ist bei herkömmlichen Meßwandlern die Erregeranordnung üblicherweise derart ausgebildet und im Meßwandler plazierte, daß sie im wesentlichen mittig an das Meßrohr angreift. Zumeist ist der wenigstens eine Schwingungserreger und insoweit die Erregeranordnung dabei, wie beispielsweise auch bei den in der US-A 57 96 010, der US-B 68 40 109, der US-B 70 77 014 oder der US-B 70 17 424 vorgeschlagenen Meßwandlern gezeigt, zumindest punktuell entlang einer gedachten mittigen Umfangslinie des Meßrohrs außen an diesem fixiert. Alternativ zu einer mittels eher zentral auf das Meßrohr wirkenden Schwingungserregern gebildeten Erregeranordnung können, wie u.a. in der US-A 48 23 614 vorgeschlagen, beispielsweise auch mittels zweier nicht im Zentrum des Meßrohres, sondern eher ein- bzw. auslaßseitig an diesem fixierten Schwingungserreger gebildete Erregeranordnung verwendet werden.

Bei den meisten Meßwandlern der beschriebenen Art sind die Schwingungssensoren der Sensoranordnung, wie bereits angedeutet, zumindest insoweit im wesentlichen baugleich ausgebildet wie der wenigstens eine Schwingungserreger, als sie nach dem gleichen Prinzip aufgebaut sind. Dementsprechend sind auch die Schwingungssensoren einer solchen Sensoranordnung zumeist jeweils mittels wenigstens einerüblicherweise am Gegenschwinger fixierten -, zumindest zeitweise von einem veränderlichen Magnetfeld durchsetzte und damit einhergehend zumindest zeitweise mit einer induzierten Meßspannung beaufschlagten sowie einem am Meßrohr fixierten, mit der wenigstens eine Spule zusammenwirkenden dauermagnetischen Anker gebildet, der das Magnetfeld liefert. Jede der vorgenannten Spulen ist zudem mittels wenigstens eines Paars elektrischer Anschlußleitungen mit der erwähnten Betriebs- und Auswerteelektronik des In-Line-Meßgeräts verbunden, die zumeist auf möglichst kurzem Wege von den Spulen über den Gegenschwinger hin zum Wandfergehäuse geführt sind.

Zur Homogenisierung des Spule und Dauermagneten durchflutenden Magnetfelds sowie Vermeidung von störenden Streufeldern ist bei Schwingungssensoren der vorgenannten Art wie auch die meisten Schwingungserreger der Dauermagnet innerhalb eines zumindest anteilig aus magnetisch leitfähigem Material bestehenden Magnetbecher plaziert und daselbst an einem üblicherweise direkt am Meßrohr befestigten Becherboden gehaltert, von dem ausgehend sich eine im wesentlichen rohrförmige, insb. kreiszylindrisch, ausgebildete Becherwand des Magnetbechers in Richtung der relativen Schwingungen von Meßrohr und Gegenschwingers erstreckt. Üblicherweise ist der Dauermagnet im wesentlichen in einem Zentrum des Becherbodens angeordnete und zumeist so an diesem fixiert, daß Dauermagnet und Becherwand zueinander im wesentlichen koaxial verlaufend ausgerichtet sind.

Neben den für das Erfassen von Vibrationen des Meßrohrs vorgesehenen Schwingungssensoren kann der Meßwandler, wie u.a. auch in der EP-A 831 306, der US-A 57 36 653, der US-A 53 81 697 oder der WO-A 01/02 816 vorgeschlagen, noch weitere, insb. dem Erfassen eher sekundärer Meßgrößen, wie z.B. Temperatur, Beschleunigung, Dehnung, Spannung etc., dienende am jedenfalls mittels Meßrohr, Gegenschwinger sowie die daran jeweils angebrachten Erreger- und Sensoranordnung gebildeten Innenteil oder aber auch in dessen Nähe angeordnete Sensoren aufweisen.

Schließlich weist jeder der in der US-A 52 91 792, der US-A 59 45 609, der US-B 70 77 014, der US-A 2007/0119264, der WO-A 01 02 816 oder auch der WO-A 99 40 394 gezeigten Meßwandler ein, insb. direkt am Einlaßrohrstück und am Auslaßrohrstück fixiertes, das Meßrohr mit daran gekoppeltem Gegenschwinger sowie die vorgesehene Erreger- und Sensoranordnung umhüllendes zusätzliches Wandlergehäuse auf, während beispielsweise bei dem in der US-A 48 23 614 gezeigten Meßwandler das Wandlergehäuse *quasi* durch den Gegenschwinger selbst gebildet ist oder, anders gesagt, Wandlergehäuse und Gegenschwinger ein und dieselbe Baueinheit sind.

Ein Vorteil von Meßwandlern mit geradem Meßrohr besteht im Vergleich zu solchen mit gebogenem Meßrohr z.B. darin, daß die sich die Meßrohr in nahezu jeder beliebigen Einbaulage, insb. auch nach einer in-line durchgeführten Reinigung, mit hoher Sicherheit rückstandsfrei selbst entleeren. Ferner sind solche Meßrohre im Vergleich z.B. zu einem gebogenen Meßrohr wesentlich einfacher und dementsprechend kostengünstiger herzustellen und verursachen im Betrieb zumeist einen geringeren Druckverlust.

Ein gerades Meßrohr bewirkt bekanntlich im hindurchströmenden Medium Corioliskräfte, wenn selbiges Meßrohr zu Biegeschwingungen in der Primär-Schwingungsebene gemäß einer ersten Eigenschwingungsform - dem sogenannten Antriebs- oder auch Nutz-Mode - angeregt ist. Bei herkömmlichen Meßaufnehmern der vorgenannten Art, beispielsweise auch solchen wie in der US-A 52 91 792, der US-B 68 40 109, der US-B 70 77 014 oder der US-B 70 17 424 vorgeschlagen, bei denen das Meßrohr im Nutzmode vornehmlich in der gedachten Primär-Schwingungsebene oszillieren gelassen wird, führen diese Corioliskräfte wiederum dazu, daß selbigen Biege-Schwingungen im Nutzmode koplanare - also ebenfalls in der Primär-Schwingungsebene vollführte - Biegeschwingungen gemäß einer zweiten Eigenschwingungsform von zumeist höherer Ordnung, jedenfalls aber anderen Symmetrieeigenschaften - dem sogenannten Coriolis- oder auch Meßmode -überlagert werden. Infolge der Biege-Schwingungen im Coriolis-Mode weisen die mittels der Sensoranordnung einlaßseitig und auslaßseitig erfaßten Schwingungen eine auch vom Massedurchfluß abhängige, meßbare Phasendifferenz auf.

Üblicherweise werden die Meßrohre derartiger Meßwandler, insb. solcher, die in Coriolis-Massedurchflußmessern eingesetzt sind, im Nutzmode auf einer momentanen Resonanzfrequenz der ersten Eigenschwingungsform, insb. bei konstantgeregelter Schwingungsamplitude, angeregt. Da diese Resonanzfrequenz im besonderen auch von der momentanen Dichte des Mediums abhängig ist, kann mittels marktüblicher Coriolis-Massedurchflußmesser neben dem Massedurchfluß zumindest auch die Dichte von strömenden Medien direkt gemessen werden.

Neben der oben erwähnten, mehr oder minder ausgeprägten Dichteabhängigkeit kann ein besonderes Problem vorbeschriebener Meßwandler mit geradem Meßrohr wie beispielsweise auch in der US-A 52 91 792, US-B 70 77 014 oder der eigenen nicht vorveröffentlichten deutschen Patentanmeldung 102007050686.6 diskutiert, allerdings auch darin bestehen, daß sie nicht nur die oben genannten natürlichen Schwingungsmoden aufweisen, in dem das Meßrohr Biegeschwingungen in der erwähnten Primär-Schwingungsebene ausführt, sondern auch solche natürlichen Schwingungsmode, in denen das Meßrohr Biegeschwingungen in einer weiteren gedachten, zur Primär-Schwingungsebene im wesentlichen orthogonalen gleichwohl die beiden Kopplungszonen imaginär schneidende Sekundär-Schwingungsebene ausführen kann, und daß jene Schwingungsmoden in der Sekundär-Schwingungsebene ohne das Ergreifen besonderer Maßnahmen naturgemäß in etwa dieselbe Resonanzfrequenz aufweisen, wie der jeweils korrespondierende Schwingungsmode in der Primär-Schwingungsebene. Anders gesagt, können bei Meßwandlern der in Rede stehenden Art mit geradem Meßrohr allfällige Meßungenauigkeiten, insb. basierend auf im Betrieb unvorhersehbaren Änderungen des Nullpunkts, daraus resultieren, daß zusätzlich zum erwünscht angeregten Nutzmode in der Primär-Schwingungsebene unerwünschte und insoweit störende Schwingungen in der Sekundär-Schwingungsebene auftreten, die sehr dicht an den Schwingfrequenzen des Nutzmodes liegen. Gleichermaßen wie dem Nutzmode in der Primär-Schwingungsebene würden dann auch dem in unerwünschter Weise angeregten gleichfrequenten Schwingungsmode in der Sekundär-Schwingungsebene dazu koplanare, durch entsprechende Corioliskräfte bedingte zusätzliche Schwingungsmoden induziert. Ursache für solche Störungen können beispielsweise Vibrationen in der angeschlossen Rohrleitung oder auch vom strömenden Medium ausgehendes, zumeist breitbandiges Rauschen sein. Infolge von in praxi nahezu unvermeidlichen Querempfindlichkeiten der Schwingungssensoren auf Schwingungen in der Sekundär-Schwingungsebene führt dies dazu, daß die unter solchen Umständen gelieferten Sensorsignale anteilig sowohl Schwingungen des Meßrohrs in der Primär-Schwingungsebene als auch korrespondierende Schwingungen des Meßrohrs Sekundär-Schwingungsebene in einem für die Meßgenauigkeit signifikantem Maße reflektieren, eine Zuordnung der entsprechenden Signalanteile auf die Primär- bzw. Sekundär-Schwingungsebene wegen der im wesentlichen gleichen Frequenzen korrespondierender Schwingungen praktisch nicht möglich ist. Darüberhinaus ist bei hinreichend starker mechanischer Kopplung von Schwingungsmoden beider Schwingungsebenen auch ein Transfer von Schwingungsenergie - spontan oder periodisch - von der Primär- in die Sekundär-Schwingungsebene bzw. auch umgekehrt von der Sekundär- in die Primär-Schwingungsebene möglich.

Infolgedessen können die Sensorsignale beispielsweise eine für deren Signalverarbeitung wie auch für die auf den Sensorsignalen basierende Schwingungsregelung durchaus schädliche charakteristische Schwebung aufweisen. Desweiteren können Schwingungsbewegungen in der Sekundär-Schwingungsebene, seien sie nun durch äußere Störungen direkt oder über den vorgenannten Energietransfer von der Primär- in die Sekundär-Schwingungsebene indirekt angeregt, dazu führen, daß die Sensorsignale zeitweise überhöhte Signalpegel aufweisen können, mit der Folge, daß die Sensorsignale empfangende und verarbeitende Eingangsverstärker entsprechend aufwendig dimensioniert sein müssen und somit vergleichsweise teuer sind.

Zur Unterdrückung solcher in der Sekundär-Schwingungsebene vollführten, insgesamt sehr schädlichen Schwingungen ist es üblich, eine für diese Schwingungen effektive Steifigkeit des Meßrohrs gegenüber einer für Schwingungen in der Primär-Schwingungsebene effektive Steifigkeit des Meßrohrs bei im wesentlichen gleichbleibenden effektiven Massen zu erhöhen und somit Resonanzfrequenzen von miteinander korrespondierenden Schwingungsmoden der Primär- bzw. Sekundär-Schwingungsebene wirksam voneinander zu separieren. Typischerweise werden hierbei Frequenzabstände von mehr als 30 Hz angestrebt. In der US-A 56 02 345 wird hierfür beispielsweise die Verwendung von ein- und auslaßseitig in unmittelbarer Nähe zu den jeweiligen Kopplungszonen am jeweiligen Meßrohr zusätzlich angebrachte, als flache Stege ausgebildete Federelemente vorgeschlagen. Als eine weitere Möglichkeit zur Separierung von Schwingungsmoden in der Primär- Schwingungsebene von korrespondierenden Schwingungsmoden in der Sekundär-Schwingungsebene ist ferner in der US-A 52 91 792 gezeigt. Bei dem dort vorgeschlagenen Meßwandler ist die für Schwingungen in der Sekundär-Schwingungsebene effektive Steifigkeit des Meßrohrs dadurch erhöht, daß das Meßrohr in seinem Zentrum mit einem entsprechend wirkenden als sich im wesentlichen in radialer Richtung zu Meßrohr und Gegenschwinger erstreckend im Meßwandler angeordnete, hier U-förmige, Versteifungsfeder ausgebildeten Federelement beaufschlagt ist, das die Steifigkeit Meßrohrs für den Coriolismode in der Primär-Schwingungsebene nicht nennenswert beeinflußt. Dadurch kann erreicht werden, daß sich die Schwingfrequenz der Schwingungen im Nutzmode hinreichend stark von der Frequenz ungewollter, also störender Schwingungen abhebt und somit der Einfluß solcher störenden Schwingungen weitgehend unterdrückt wird. Alternativ hierzu ist in der erwähnten deutschen Patentanmeldung 102007050686.6 vorgeschlagen worden, einlaß- und auslaßseitig in der Nähe der Kopplungszonen plazierte "dezentrale" Federelemente zur Frequenztrennung zu verwenden.

Als eine weitere Ursache für solche, insb. auch den Nullpunkt beeinflussende, Störungen der Schwingungsmeßsignale - besonders auch bei zumindest unter Laborbedingungen hinsichtlich der Dichte perfekt ausbalancierten und lediglich in der Primär-Schwingungsebene schwingengelassenem Innenteil - konnten zudem, wie auch in den eigenen nicht vorveröffentlichten deutschen Patentanmeldungen 102006062220.0, 102006062219.7 bzw. 102006062185.9 diskutiert, die Anschlußleitungen identifiziert werden. Dem Rechnung tragend ist in den vorgenannten Patentanmeldungen vorgeschlagen worden, diesen Störungen durch eine gezielt angepaßte Führung der Leitungen entlang des Innenteils bis hin zum Wandlergehäuse entgegen zu wirken.

Obzwar vorgenannte Maßnahmen - einzeln oder in Kombination - durchaus zu beträchtlichen Verbesserungen der Meßgenauigkeit von Meßwandlern der in Rede stehenden Art, insb. auch deren Nullpunkstabilität, geführt haben, ließen weitergehende, insb. auch unter Laborbedingungen und weitgehend frei von Störvibrationen durchgeführte, Untersuchungen -wenngleich geringfügige, so doch für die für solche Meßwandler angestrebte extrem hohe Meßgenauigkeit nicht unerhebliche - Schwankungen im Nullpunkt erkennen, die durch keines der oben genannten Phänomene erklärbar waren. Im besonderen mußte hierbei - trotz weitgehender Eliminierung oder Vermeidung der oben erwähnten Störungen - immer noch eine gewisse Abhängigkeit des Nullpunkts von der Einbausituation konstatiert werden, die selbst wiederum eine gewisse Ortsabhängigkeit aufzeigt.

Andere, die Meßgenauigkeit, insb. die Stabilität des den Nullpunktes, von Meßwandlern der in Rede stehenden Art potentiell herabsetzende Störquellen wie etwa auch elektromagnetische Wechselfelder oder, wie u.a. in der US-B 72 99 699 diskutiert, Schwingungsreibungen, Materialermüdungen oder Entfestigungen von Bauteileverbindungen konnten dabei ebenfalls ausgeschlossen werden oder hätten zumindest nicht das Ausmaß der beobachteten Nullpunktverschiebungen erklären können.

Laborversuche mit einer Helmholtzspule, deren - bekanntlich weitgehend homogenem - geschalteten Magnetfeld ein entsprechender Meßwandler der in Rede stehende Art in verschieden Einbaulagen ausgesetzt worden ist, haben schließlich überraschenderweise Gleich-Magnetfelder als eine mögliche Störquelle für die bislang unerklärlich hohen beobachtenden Nullpunktverschiebungen identifiziert. Weiterführend konnte so schließlich auch der besondere Einfluß des im obigen Sinne in erheblichem Maße ortsabhängigen Erdmagnetfelds als Ursache für eine Ortsabhängigkeit des Nullpunkts oder vielmehr eine Ortsabhängigkeit von dessen Änderungen erkannt werden, wobei angesichts des im Vergleich zu den eher hohen Feldstärken von etwa 800mT, die die regulären Meßspannungen in den Schwingungssensoren bewirken, um einige Größenordnungen schwächeren Erdmagnetfelds die Empfindlichkeit der Schwingungssensoren auf lokale Änderungen von dessen Felddichte durchaus überraschend ist.

Eine Möglichkeit zur Behebung des vorgenannten Problems bestünde nunmehr beispielsweise darin, das Wandlergehäuse so auszubilden, daß dessen effektiver magnetischer Widerstand signifikant verringert wird. Dies wiederum würde die Verwendung von Materialien mit einer vergleichsweise hohen relativen magnetischen Leitfähigkeit erfordern, wie etwa Automatenstahl oder Baustahl. Allerdings können solche Materialien, wie beispielsweise auch in der US-B 63 30 832 erörtert, die an industrietaugliche Meßwandler der in Rede stehenden Art gestellten hohen Anforderungen hinsichtlich Korrosionsbeständigkeit und/oder Hygiene nicht immer voll umfänglich erfüllen, so daß dann den ohnehin hohen Material- und/oder Fertigungsaufwand weiter erhöhende Maßnahmen ergriffen werden müßten.

Eine Aufgabe der Erfindung besteht daher darin, Meßwandler der vorgenannten Art dahingehend zu verbessern, daß eine deutlich geringere Abhängigkeit der Meßgenauigkeit von der tatsächlichen Einbaulage und/oder vom tatsächlichen Einbauort des Meßwandlers erreicht werden kann. Dies im besonderen auch mit gegenüber herkömmlichen Meßwandlern vergleichbarem oder nur unwesentlich höherem Aufwand hinsichtlich Fertigung und/oder Material, Die Aufgabe der Erfindung wird durch die Merkmale der Ansprüche 1 und 17 gelöst.

Weitere Ausgestaltungen der Erfindung werden in den abhängigen Ansprüchen definiert.

Zur Lösung der Aufgabe besteht die Erfindung in einem Meßwandler vom Vibrationstyp für ein in einer Rohrleitung strömendes Medium, welcher Meßwandler wenigstens ein zumindest zeitweise vibrierendes Meßrohr zum Führen von zu messendem Medium, einen Gegenschwinger, der unter Bildung einer ersten Kopplungszone einlaßseitig am Meßrohr fixiert ist und der unter Bildung einer zweiten Kopplungszone auslaßseitig am Meßrohr fixiert ist, wenigstens einen, insb. elektrodynamischen, Schwingungserreger zum, beispielsweise differentiellen, Erzeugen von mechanischen Schwingungen zumindest des Meßrohrs relativ zum Gegenschwinger, sowie wenigstens einen, insb. elektrodynamischen, ersten Schwingungssensor zum, beispielsweise differentiellen, Erfassen von Schwingungen zumindest des Meßrohrs relativ zum Gegenschwinger umfaßt. Beim erfindungsgemäßen Meßwandler weist der wenigstens eine Schwingungssensor zudem eine, beispielsweise am Gegenschwinger fixierte, Spule sowie einen mit dieser magnetisch gekoppelten Dauermagneten auf, der innerhalb eines zumindest anteilig aus magnetisch leitfähigem Material bestehenden Magnetbecher plaziert und daselbst an einem, beispielsweise am Meßrohr befestigten, Becherboden gehaltert ist. Darüberhinaus ist beim erfindungsgemäßen Meßwandler vorgesehen, daß eine, beispielsweise im wesentlichen kreiszylindrisch und/oder rohrförmig ausgebildete, sich vom Becherboden aus, beispielsweise im wesentlichen in Richtung des Gegenschwingers und/oder in Richtung von Biegeschwingungen des Meßrohrs relativ zum Gegenschwinger, erstreckende Becherwand des Magnetbechers wenigstens einen, beispielsweise sich zumindest abschnittsweise in Richtung von Schwingungen des Meßrohrs relativ zum Gegenschwinger erstreckenden, Schlitz aufweist.

Darüber hinaus besteht die Erfindung in einem, beispielsweise als Coriolis-Massendurchflußmeßgerät, Dichtemeßgerät, Viskositätsmeßgerät oder dergleichen ausgebildeten, In-Line-Meßgerät zum Messen und/oder Überwachen wenigstens eines Parameters, beispielsweise eines Massendurchflusse einer Dichte und/oder einer Viskosität, eines in einer Rohrleitung strömenden Mediums, in welchem In-Line-Meßgerät ein Meßwandler der oben genannten Art Verwendung findet.

Der Meßwandler ist im besonderen ferner so ausgebildet, daß er wenigstens einen ersten natürlichen Schwingungsmode aufweist, in dem zumindest das Meßrohr Biegeschwingungen in einer gedachten Primär-Schwingungsebene ausführen kann. Diesen Aspekt des erfindungsgemäßen Meßwandlers weiterbildend ist vorgesehen, daß das Meßrohr im Betrieb mittels des wenigstens einen Schwingungserregers zumindest zeitweise derart angeregt ist, daß es zumindest anteilig, insb. überwiegend oder ausschließlich, in der gedachten Primär-Schwingungsebene oszilliert.

Die Erfindung basiert u.a. auf der überraschenden Erkenntnis, daß das einerseits überwiegend Gleichanteile von extern auf Meßwandler der in Rede stehenden Art wirkende Magnetfelder im Sinne der angestrebten Meßgenauigkeit signifikanten Einfluß auf den Nullpunkt haben, daß aber anderseits weniger die Bewegung der Spule im Magnetfeld als solches zu entsprechenden Störungen in den von den Schwingungssensoren gelieferten Meßsignalen führen, sondern vielmehr die periodische Variierung des relativen Abstandes zwischen vibrierendem Meßrohr und Gegenschwinger. Dies wiederum im besonderen deshalb, weil aufgrund der periodische Variierung des relativen Abstandes letzlich der magnetische Widerstand des Innenteils und somit die räumliche Verteilung des Magnetfelds innerhalb des Meßwandlers insgesamt und damit einhergehend auch die Magnetfelddichte im Bereich der Schwingungssensoren im Takte der Schwingfrequenzen des Nutzmodes wiederkehrend verändert werden. Infolge der zeitlichen Änderung der Magnetfelddichte im Bereich der Schwingungssensoren können so zum einen entsprechende Spannungen in der Spule wie auch den angeschlossenen Anschlußleitungen induziert werden, zum anderen können sich aber auch in großflächigen Metallteilen entsprechende Wirbelströme ausbilden, die selbst wiederum Spannungsinduktionen im Schwingungssensor zur Folge haben können. Als besonders prädestiniert für Störungen der beschriebenen Art hat sich dabei der bei solchen Schwingungssensoren üblicherweise verwendet Magnetbecher herausgestellt.

Ein Grundgedanke der Erfindung besteht u.a. darin, die via Erdmagnetfeld im Meßwandler bzw. infolge periodischer Veränderungen von dessen Felddichte im Bereich der Schwingungssensoren erzeugten Störungen des Nullpunktes dadurch auf einfache Weise wirksam zu verringern, daß der im Sinne eines stabilen Nullpunkts als besonders neuralgisch identifizeirte Magnetbecher mittels Schlitzen geeignet modifiziert wird, und zwar unter möglichst weitgehend Beibehaltung der in Meßwandlern der in Rede stehenden Art bereits etablierten Bauformen und Materialien wie auch der ansonsten guten Eigenschaften hinsichtlich der Führung bzw. Homogenisierung des den eignetlichen Meßeffekt bewirkenden Magnetfelds des Dauermagneten innerhalb des Schwingungsensors.

Abgesehen davon, daß der Einfluß des Magnetfelds insgesamt umso geringer ausfällt, je mehr Schlitze im Magnetbecher eingebracht sind, hat sich überraschenderweise gezeigt, daß sich auch bereits bei Verwendung von Schwingungssensoren mit jeweils einem einzigen entlang der Becherwand verlaufenden Schlitzes eine signifikante Verbesserung der Nullpunktstabilität des jeweiligen Meßwandlers erzielen läßt. Umgekehrt ist der Anzahl und/oder der Größe der in den Magnetbecher letztlich tatsächlich einformbaren Schlitze zumindest insoweit eine Grenze gesetzt, als dadurch die Vibrationsfestigkeit und die Steifigkeit des Magnetbechers herabgesetzt und damit einhergehend die Neigung zu unerwünschten Eigenvibrationen des Magnetbechers heraufgesetzt werden. Gleichermaßen ist die Anzahl der Schlitze auch zwecks ausreichender Homogeniserung und für die eigentliche Messung geeigneter Führung des Magnetfelds des Dauermagneten auf eine möglichst geringe Anzahl sinnvoll zu begrenzen. Eine Abwägung von Aufwand und Nutzen wird in *praxi* eher dazu führen, daß etwa zwei bis vier solcher Schlitze pro Schwingungssensor für die üblicherweise angestrebten Meßgenauigkeiten wie auch Sinne möglichst geringer Herstelllungskosten durchaus zufriedenstellende Ergebnisse liefern werden.

Nachfolgend werden die Erfindung und vorteilhafte Ausgestaltungen derselben anhand eines Ausführungsbeispiels erläutert, das in den Figuren der Zeichnung dargestellt ist; gleiche Teile sind in den Figuren im übrigen mit gleichen Bezugszeichen versehen. Falls es der Übersichtlichkeit dienlich ist, wird auf bereits erwähnte Bezugszeichen in nachfolgenden Figuren verzichtet. Im einzelne sind in:
- Fig. 1: ein in eine Rohrleitung einfügbares In-Line-Meßgerät zum Messen wenigstens eines Parameters eines in der Rohrleitung geführten Mediums gezeigt,
- Fig. 2: ein Beispiel für einen für das In-Line-Meßgerät von Fig. 1 geeigneten Meßwandler vom Vibrations-Typ mit einem Meßrohr und einem Gegenschwinger sowie endseitigen Auslegern in einer perspektivischen Seitenansicht gezeigt,
- Fig. 3: den Meßwandler von Fig. 2 geschnitten in einer Seitenansicht gezeigt,
- Fig. 4: den Meßwandler von Fig. 2 in einem ersten Querschnitt gezeigt,
- Fig. 5: den Meßwandler von Fig. 2 in einem zweiten Querschnitt gezeigt,
- Fign. 6 a bis d: schematisch Biegelinien des Meßrohrs und eines Gegenschwingers in einem lateralen Biegeschwingungsmode oszillierend gezeigt,
- Fig. 7a, b: in verschiedenen Ansichten einen Magnetbecher eines Schwingungssensors für einen Meßwandlers gemäß Fig. 2 gezeigt, und
- Fig. 8a, b: in verschiedenen Ansichten einen Magnetbecher eines Schwingungserreger für einen Meßwandlers gemäß Fig. 2 gezeigt.

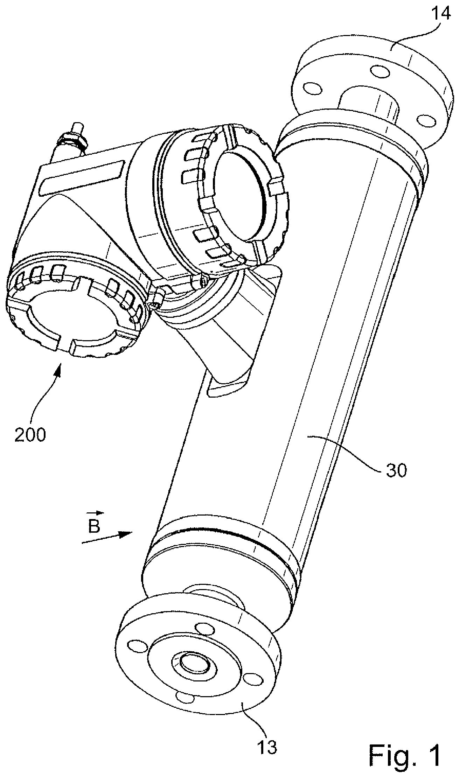

Die Figuren 1 bis 5 und 6a bis 6d zeigen einen aus DE 10 2005 054 855 A1 bekannten Messwandler. In der Fig. 1 ist ein in eine - hier nicht dargestellte - Rohrleitung einfügbares, beispielsweise als Coriolis-Massendurchflußmeßgerät, Dichtemeßgerät, Viskositätsmeßgerät oder dergleichen ausgebildetes, In-Line-Meßgerät gezeigt, das dem Messen und/oder Überwachen wenigstens eines Parameters, beispielsweise einem Massendurchfluß, einer Dichte, einer Viskosität etc., eines in der Rohrleitung strömenden Mediums dient. Das In-Line-Meßgerät umfaßt dafür einen an eine in einem entsprechenden Elektronik-Gehäuse 200 untergebrachte - hier nicht dargestellte - Betriebs- und Auswerteelektronik des In-Line-Meßgerät elektrisch angeschlossenen Meßwandler vom Vibrationstyp, der im Betrieb entsprechend vom zu messenden Medium durchströmt ist.

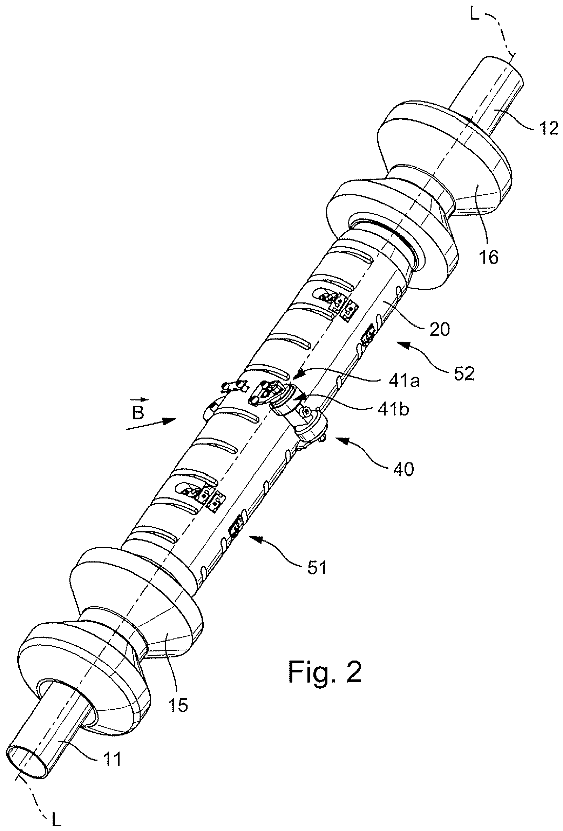

In den Fig. 2 bis 5 ist exemplarisch anhand eines Ausführungsbeispiel der prinzipielle Aufbau für einen solchen Meßwandler vom Vibrationstyp schematisch in verschiedenen Schnittansichten dargestellt. Darüber hinaus sind der prinzipielle mechanische Aufbau sowie dessen Wirkungsweise des exemplarisch gezeigte Meßwandlers mit den denen der in den US-A 2007/0119265, US-A 2007/0119264, US-B 66 91 583, der US-B 68 40 109 gezeigten Meßwandler vergleichbar.

Der Meßwandler dient dazu, in einem hindurchströmenden Medium mechanische Reaktionskräfte, z.B. massedurchflußabhängige CoriolisKräfte, dichteabhängige Trägheitskräfte und/oder viskositätsabhängige Reibungskräfte, zu erzeugen, die meßbar, insb. sensorisch erfaßbar, auf den Meßwandler zurückwirken. Abgeleitet von diesen Reaktionskräften können so in der dem Fachmann bekannten Weise z.B. ein Massedurchfluß *m*, eine Dichte *ρ* und/oder eine Viskosität *η* des Mediums gemessen werden. Zum Führen des Mediums umfaßt Meßwandler wenigstens ein - im hier gezeigten Ausführungsbeispiel einziges, im wesentlichen gerades - Meßrohr 10, das im Betrieb, beispielsweise in einem natürlichen Biegeschwingungsmode und/oder in einem natürlichen Torsionsschwingungsmode, vibrieren gelassen und dabei, um eine statische Ruhelage oszillierend, wiederholt elastisch verformt wird. Dabei weist der Meßwandler wenigstens einen ersten natürlichen Schwingungsmode auf, in dem zumindest das Meßrohr Biegeschwingungen in einer gedachten Primär-Schwingungsebene XZ ausführen kann.

Zur Minimierung von auf das Meßrohr 10 wirkenden Störeinflüssen wie auch zur Reduzierung von seitens des Meßwandlers an die angeschlossene Rohrleitung abgegebener Schwingungsenergie ist im Meßwandler des weiteren ein - hier im wesentlichen gerader und im wesentlichen parallel zum Meßrohr 10 verlaufender - Gegenschwinger 20 vorgesehen. Dieser ist, wie auch in Fig. 2 gezeigt, unter Bildung einer - praktisch ein Einlaßende des Meßrohrs 10 definierenden - ersten Kopplungszone 11# einlaßseitig und der unter Bildung einer - praktisch ein Auslaßende des Meßrohrs 10 definierenden - zweiten Kopplungszone 12# auslaßseitig jeweils am Meßrohr 10 fixiert.

Der Gegenschwinger 20 kann z.B. rohr - oder kastenförmig ausgeführt und beispielsweise so am Einlaßende und am Auslaßende mit dem Meßrohr 10 verbunden sein, daß er, wie bei derartigen Meßwandlern durchaus üblich, im wesentlichen koaxial zum - hier im wesentlichen geraden - Meßrohr 10 ausgerichtet ist und somit das Meßrohr 10 vom Gegenschwinger 20 zumindest teilweise ummantelt ist. Nach einer Ausgestaltung der Erfindung ist der Gegenschwinger hinsichtlich seiner Masse und Biegesteifigkeit ferner so auf das Meßrohr abgestimmt, daß im Vergleich zu den Biegeschwingungen des Meßrohrs durchaus nennenswerte gleichfrequente Biegeschwingungen ausführt und insoweit im Betrieb auch zumindest zeitweise Biegeschwingungen um die Biegeschwingungsachse ausführt. Es kann aber auch von Vorteil sein, wenn der Gegenschwinger 20 wesentlich schwerer ausgelegt ist als das Meßrohr 10, so daß er im Vergleich zum Meßrohr zumindest nominell eine kleinere Eigenfrequenz aufweist und somit im Betrieb kaum schwingt oder zumindest im Vergleich zum Meßrohr keine nennenswerten Schwingungen ausführt.

Zum Ein- bzw. Ausleiten des zu messenden Mediums in das Meßrohr 10 ist dieses über ein einlaßseitig im Bereich der ersten Kopplungszone einmündendes Einlaßrohrstück 11 und über ein auslaßseitig im Bereich der zweiten Kopplungszone einmündendes, insb. zum Einlaßrohrstück 11 im wesentlichen identisches, Auslaßrohrstück 12 entsprechend an die das Medium zu- bzw. abführende - hier nicht dargestellte - Rohrleitung angeschlossen. Einlaßrohrstück 11 und Auslaßrohrstück 12 sind im gezeigten Ausführungsbeispiel wesentlichen gerade ausgeführt und zueinander, zum Meßrohr 10 sowie zu einer die Kopplungszonen praktisch verbindenden imaginären Längsachse L fluchtend ausgerichtet. In vorteilhafter Weise können Meßrohr 10, Einlaß- und Auslaßrohrstück 11, 12 einstückig ausgeführt sein, so daß zu deren Herstellung z.B. ein einziges rohrförmiges Halbzeug dienen kann. Anstelle dessen, daß Meßrohr 10, Einlaßrohrstück 11 und Auslaßrohrstück 12 jeweils durch Segmente eines einzigen, einstückigen Rohres gebildet sind, können diese, falls erforderlich aber auch mittels einzelner, nachträglich zusammengefügter, z.B. zusammengeschweißter, Halbzeuge hergestellt werden. Nach einer Ausgestaltung der Erfindung ist das Meßrohr ferner so ausgebildet, daß es sich zwischen den beiden Kopplungszonen mit im wesentlichen gleichbleibendem, insb. kreisringförmigem, Querschnitt erstreckt. Im besonderen ist ferner vorgesehen, daß das Meßrohr 10 im wesentlichen zylindrisch, insb. kreiszylindrisch, geformt ist.

Das mittels des Meßrohrs 10, des Gegenschwingers 20, des Einlaßrohrstücks 11 sowie des Auslaßrohrstücks 12 gebildete Innenteil des Meßwandlers ist, wie aus einer Zusammenschau von Fig. 1 und 2 ersichtlich, ferner in einem selbiges Innenteil mediumsdicht und weitgehend druckfest umhüllendes Wandlergehäuse 30 schwingfähig gehaltert, das am jeweils von den Kopplungszonen entfernten Ende des Ein- und Auslaßrohrstück 11, 12 entsprechend fixiert ist. Für den Fall, daß der Meßwandler lösbaren mit der Rohrleitung zu montieren ist, ist dem Einlaßrohrstück 11 und dem Auslaßrohrstück 12 jeweils ein erster bzw. zweiter Flansch 13, 14 entsprechend angeformt. Die Flansche 13, 14 können dabei gleichzeitig auch als integraler Bestandteil des Wandlergehäuses 30 ausgebildet sein. Falls erforderlich können Ein- und Auslaßrohrstück 11, 12 aber auch direkt mit der Rohrleitung, z.B. mittels Schweißen oder Hartlötung, verbunden werden.

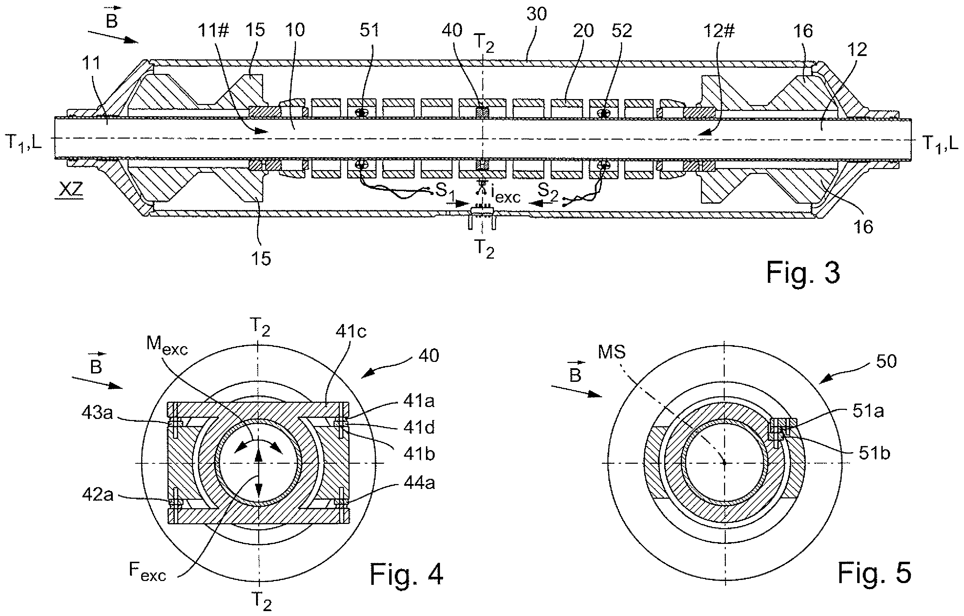

Zum Erzeugen mechanischer Schwingungen des Meßrohrs 10 - seien es nun Biegeschwingungen und/oder Torsionsschwingungen - umfaßt der Meßwandler weiters eine, insb. elektrodynamische, Erregeranordnung 40. Diese dient dazu, eine mittels der Betriebs- und Auswerte-Elektronik inform eines entsprechend konditionierten elektrischen Treibersignals, z.B. mit einem geregelten Strom und/oder einer geregelten Spannung, eingespeiste elektrische Erregerenergie E_{exc} in eine auf das Meßrohr 10, z.B. pulsförmig, getaktet oder harmonisch, einwirkende und dieses in der vorbeschriebenen Weise elastisch verformende Erregerkraft F_{exc} umzuwandeln. Die Erregerkraft F_{exc} kann hierbei, wie in Fig. 4 schematisch dargestellt, bidirektional oder aber auch unidirektional ausgebildet sein und in der dem Fachmann bekannten Weise z.B. mittels einer Strom- und/oder Spannungs-Regelschaltung, hinsichtlich ihrer Amplitude und, z.B. mittels einer Phasen-Regelschleife, hinsichtlich ihrer Frequenz eingestellt werden. Im besonderen ist die Erregranordnung 40, wie bei derartigen Meßwandlern durchaus üblich, ferner so ausgebildet und im Meßwandler angeordnet, daß sie im wesentlichen mittig an das Meßrohr 10 angreift und/oder zumindest punktuell entlang einer gedachten mittigen Umfangslinie des Meßrohrs außen an diesem fixiert ist. Als Erregeranordnung 40 kann z.B. eine einfache differentiell auf Meßrohr 10 und Gegenschwinger 20 einwirkende, elektrodynamische Tauchspulenanordnung mit wenigstens einer direkt oder - wie Fig. 2 und 4 gezeigt - mittelbar am Gegenschwinger 20 befestigten zylindrischen Erregerspule 41a, die im Betrieb von einem entsprechenden Erregerstrom oder einem davon abgezweigten Erregerteilstrom durchflossen ist, und mit einem in die Erregerspule 41a zumindest teilweise eintauchenden dauermagnetischen Anker 41 b, der von außen, insb. mittig und/oder mittelbar, am Meßrohr 10 fixiert ist, dienen. Im hier gezeigten Ausführungsbeispiel ist die wenigstens eine Erregerspule 41 a der Erregeranordnung 40 an einem - hier mit dem Meßrohr 10 verbundenen - Hebel 41' fixiert und über diesen und im Zusammenspiel mit dem- hier von außen am Gegenschwinger 20 fixierten - dauermagnetischen Anker 41 b auf Meßrohr 10 und Gegenschwinger 20 einwirkt. Die im Ausführungsbeispiel gezeigte Erregeranordnung 40 weist darüber hinaus drei weitere jeweils differentiell auf Meßrohr 10 und Gegenschwinger 20 einwirkende Tauchspulenanordnungen 42, 43, 44 der vorgenannten Art auf. Alternativ zu den vorgenannten elektrodynamischen Tauchspulenanordnungen kann die Erregeranordnung 40 aber z.B. auch mittels Elektromagneten oder auch mittels seismischer Erreger realisiert sein. Im übrigen ist bei Meßwandlern der vorgenannten Art zudem auch möglich, die jeweilige Spule und/oder den Anker vom Schwingungserreger unter Verzicht auf einen vermittelnden Hebel beispielsweise direkt am Meßrohr oder am Gegenschwinger zu befestigen.

Zum Erfassen von Schwingungen zumindest des Meßrohrs 10 relativ zum Gegenschwinger 20 umfaßt der Meßwandler ferner wenigstens einen, insb. elektrodynamischen und/oder die relativen Schwingungen von Meßrohr und Gegenschwinger differentiell erfassenden, Schwingungssensor 51, der im Betrieb zumindest zeitweise ein Vibrationen des Meßrohrs 10 repräsentierendes Schwingungsmeßsignal s₁ liefert. Der wenigstens eine Schwingungssensor 51 weist, wie bei derartigen Meßwandlern durchaus üblich, eine - hier am Gegenschwinger 20 fixierte - Spule 51a sowie einen mit dieser magnetisch gekoppelten - hier am Meßrohr 10 befestigten - als Dauermagnet ausgebildeten Anker 51b auf. Nach einer Ausgestaltung der Erfindung besteht der Dauermagnet zumindest anteilig, insb. überwiegend, zumindest anteilig, insb. überwiegend oder vollständig, aus einer Seltenenerde-Legierung, wie etwa AlNiCo, NyFeB, SmCo oder dergleichen. Alternativ oder in Ergänzung kann der Dauermagnet beispielsweise aber auch aus einem Ferrit hergestellt sein.

Die Sensorspule 51a ist möglichst nah zu dem - hier am Gegenschwinger 20 fixierten - dauermagnetischen Anker 51b angeordnet und mit diesem magnetisch so gekoppelt, daß in der Sensorspule 51a eine veränderliche Meßspannung induziert wird, die durch einen relativen Abstand zwischen Sensorspule und Anker verändernde laterale Relativbewegungen zwischen Meßrohr 10 und Gegenschwinger 20 und/oder eine relative Lage der Sensorspule bezüglich des Ankers verändernde rotatorische Relativbewegungen zwischen Meßrohr 10 und Gegenschwinger 20 beeinflußt ist. Falls erforderlich können die Sensorspule 51a dazu aber auch am Gegenschwinger 20 und in entsprechender Weise der mit dieser gekoppelte Anker 51b am Meßrohr 10 fixiert sein.

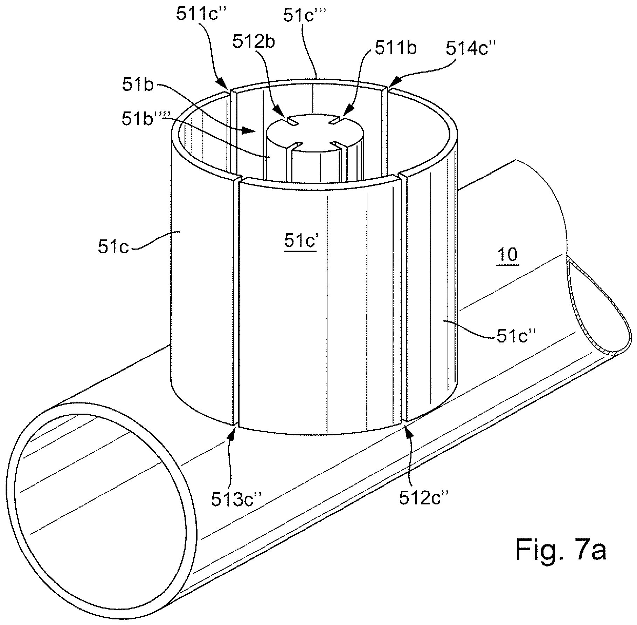

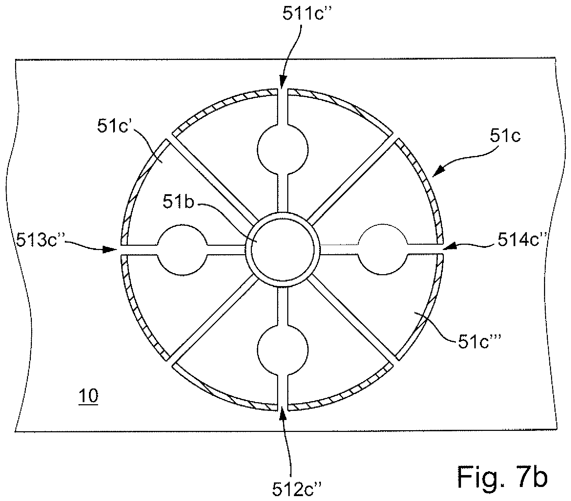

Der, insb. länglich und/oder stabförmig ausgebildete, Dauermagnet 51b wiederum ist - wie in den Fign. 7a und 7b schematisch dargestellt - innerhalb eines zumindest anteilig aus magnetisch leitfähigem Material bestehenden Magnetbecher 51c plaziert und daselbst an einem, beispielsweise unmittelbar am Meßrohr 10 befestigten, Becherboden 51c' gehaltert. Dabei kann es durchaus von Vorteil sein, den Dauermagnet 51b im wesentlichen in einem Zentrum des Becherbodens 51c' an diesem zu fixieren. Nach einer weiteren Ausgestaltung der Erfindung besteht der Magnetbecher 51c ferner zumindest anteilig, insb. überwiegend oder vollständig, aus einem Stahl, wie etwa einem Automatenstahl oder einem Baustahl. Alternativ oder in Ergänzung kann der Magnetbecher 51c aber z.B. auch aus einem Ferrit hergestellt sein. Ausgehend vom Becherboden 51c' erstreckt sich ferner eine, insb. im wesentlichen kreiszylindrisch und/oder rohrförmig ausgebildete, Becherwand 51c" des Magnetbechers 51c. Gemäß einer weiteren Ausgestaltung der Erfindung sind Dauermagnet 51b und Spule 51a des wenigstes eine Schwingungssensors 51 zueinander im wesentlichen koaxial verlaufend ausgerichtet. Für den bereits angedeuteten Fall, daß die Becherwand 51c" des Magnetbechers 51c im wesentlichen kreiszylindrisch und/oder rohrförmig ausgebildet ist, ist gemäß einer anderen Weiterbildung der Erfindung ferner vorgesehen, Dauermagnet 51b und Becherwand 51c" zueinander im wesentlichen koaxial verlaufend auszurichten.

Gemäß einer Weiterbildung der Erfindung umfaßt der Meßwandler neben dem wenigstens einen Schwingungssensor 51, wie aus Fig. 3 ersichtlich, zumindest einen weiteren Schwingungssensor 52 der im Betrieb zumindest zeitweise ein entsprechendes zweites Schwingungssignal s₂ liefert. Zum Detektieren von einlaßseitigen und auslaßseitigen Schwingungen des Meßrohr 10 ist der erste der wenigsten zwei Schwingungssensoren 51, 52, - wie in Fig. 2 oder 3 schematisch dargestellt - einlaßseitig am Meßrohr 10 plaziert, während der zweite der wenigsten zwei Schwingungssensoren 51, 52, auslaßseitig am Meßrohr 10 angeordnet ist. Die beide, insb. einander im wesentlichen baugleich ausgebildeten, Schwingungssensoren 51, 52 sind dabei in vorteilhafter Weise auf ein und derselben Seite am Meßrohr 10 und angeordnet und dabei so von jeder der beiden Kopplungszone 11#, 12# beabstandet im Meßwandler plaziert, daß sie jeweils im wesentlichen den gleichen Abstand zur Mitte des Meßrohrs 10 und/oder zur jeweils nächsten der beiden Kopplungszone 11#, 12# aufweisen.

Die Erregeranordnung 40 wie auch der wenigstens eine Schwingungssensor 51 sind mit der erwähnten Betriebs- und Auswerte-Elektronik des In-Line-Meßgeräts des weiteren mittels entsprechende Anschlußleitungen elektrisch verbunden, die wiederum zumindest abschnittsweise innerhalb des Wandlergehäuses geführt sind, vgl. hierzu im besonderen auch die eingangs erwähnten eigenen deutschen Patentanmeldungen 102006062220.0, 102006062219.7 bzw. 102006062185.9. Die Anschlußleitungen können dabei zumindest anteilig als elektrische, zumindest abschnittsweise in von einer elektrischen Isolierung umhüllte Leitungsdrähte ausgebildet sein, z.B. inform von "Twisted-pair"-Leitungen, Flachbandkabeln und/oder Koaxialkabeln. Alternativ oder in Ergänzung dazu können die Anschlußleitungen zumindest abschnittsweise auch mittels Leiterbahnen einer, insb. flexiblen, gegebenenfalls überlackierten Leiterplatte gebildet sein.

Gemäß einer weiteren Ausgestaltung der Erfindung sind Meßrohr 10, Gegenschwinger 20, der wenigstens eine Schwingungssensor 51 bzw. die Schwingungssensoren sowie die Erregeranordnung 40 hinsichtlich ihrer Massenverteilung ferner insgesamt so aufeinander abgestimmt, daß das so gebildete, mittels des Ein- und am Auslaßrohrstücks 11, 12 aufgehängte Innenteil des Meßwandlers einen Massenschwerpunkt MS aufweist, der zumindest innerhalb des Meßrohrs 10, bevorzugt aber möglichst nah an der Meßrohrlängsachse L liegt. Zudem ist das Innenteil ferner so ausgebildet, daß es eine mit dem Einlaßrohrstück 11 und dem Auslaßrohrstück 12 fluchtende und zumindest abschnittsweise innerhalb des Meßrohrs 10 liegende erste Trägheitshauptachse T₁ aufweist. Infolge der Positionierung des Massenschwerpunktes MS des Innenteils, insb. aber auch aufgrund der vorbeschriebenen Lage der ersten Trägheitshauptachse T₁ können die Torsionsschwingungen und die Biegeschwingungen des Meßrohrs 10 zumindest im Nutzmode mechanisch voneinander weitestgehend entkoppelt werden.

Das Innenteil Meßwandlers ist gemäß einer anderen Ausgestaltung der Erfindung derart ausgestaltet, daß eine erste Trägheitshauptachse T₁ davon mit der oben Längsachse L im wesentlichen koinzidiert. Ferner ist gemäß einer weiteren Ausgestaltung der Erfindung das Innenteil des Meßwandlers derart ausgestaltet, daß eine zweite Trägheitshauptachse T₂ davon im wesentlichen mit der oben erwähnten Mittelachse zusammenfällt.

Zur weiteren Verbesserung der Meßgenauigkeit und in Anlehnung an die in den eingangs erwähnten US-A 2007/0186685, US-A 2007/0119265, US-A 2007/0119264, US-B 66 91 583, oder US-B 68 40 109 vorgeschlagenen Meßwandler umfaßt gemäß einer Weiterbildung der Erfindung der erfindungsgemäße Meßwandler, wie auch aus der Zusammenschau der Fign. 2, 3 und 6a ersichtlich, ferner einen im Bereich der ersten Kopplungszone mit dem Einlaßrohrstück 11 und dem Meßrohr 10 gekoppelten ersten Ausleger 15, der einen im Bereich des Einlaßrohrstücks 11 liegenden Massenschwerpunkt M₁₅ aufweist, sowie einen im Bereich der zweiten Kopplungszone mit dem Auslaßrohrstück 12 und dem Meßrohr 10 gekoppelten zweiten Ausleger 16, der einen im Bereich des Auslaßrohrstücks 12 liegenden Massenschwerpunkt M₁₆ aufweist. Anders gesagt, sind die beiden, insb. im wesentlichen baugleichen, ggf. sogar einander identischen, Ausleger 15, 16 so im Meßwandler angeordnet, daß der jeweilige Masseschwerpunkt M₁₅, M₁₆ vom Meßrohr 10, insb. in dessen Flucht liegend, beabstandet ist. Die beiden Ausleger 15, 16 sind also insoweit exzentrisch am Ein- bzw. Auslaßrohrstück und entsprechend exzentrisch auch an Meßrohr 10 und Gegenschwinger 20 gehaltert. Die Wirkungsweise des so gebildeten Innenteils entspricht dabei der in den erwähnten US-A 2007/0186685, US-A 2007/0119265, US-A 2007/0119264, US-B 66 91 583, oder US-B 68 40 109 gezeigten Innenteile. Um eine möglichst einfache, kostengünstige Fertigung der Ausleger wie schließlich des Meßwandlers zu ermöglichen, kann jeder der beiden Ausleger 15, 16 beispielsweise im wesentlichen röhrenförmig oder hülsenförmig ausgebildet sein, so daß er praktisch mittels einer auf den Gegenschwinger 20 aufgeschobenen, insb. metallische, Hülse gebildet werden kann, insb. auch dann, wenn der Gegenschwinger 20 bereits mit dem Meßrohr 10 verbunden worden ist. Gemäß einer Weiterbildung dessen weist jeder der dabei den jeweiligen Ausleger 15, 16 bildenden Hülsen jeweils wenigstens eine Ringnut auf, vgl. auch hiefür die erwähnten US-A 2007/0186685, US-A 2007/0119264 oder US-A 2007/0119265.

Zur Herstellung von Ein- und Auslaßrohrstück sowie dem Meßrohr kann im übrigen praktisch jedes der für solche Meßwandler üblichen Materialien, wie z.B. rostfreier und/oder austenitischer Stahl, Titan, Tantal, Zirkonium oder aber auch Nickellegierungen, wie etwa Hastelloy, verwendet werden. Beispielsweise hat sich besonders die Verwendung von Titan, Tantal, Zirkonium oder auch rostfreier Stahl, wie etwa 316 L, 318 L, für das Meßrohr 10 sowie das Einlaßrohrstück 11 und das Auslaßrohrstück 12 als besonders geeignet gezeigt, während - beispielsweise aus Gründen der Kostenersparnis - sowohl für den Gegenschwinger 20 sowie die gegebenenfalls vorgesehenen Ausleger 15, 16 als auch für das Wandlergehäuse 30 die Verwendung von kostengünstigem, dann allerdings aber zumeist auch magnetisch gut leitfähigem Schwarzstahl durchaus von Vorteil sein kann. Dementsprechend ist das Meßrohr 10 nach einer weiteren Ausgestaltung der Erfindung ferner so ausgebildet, daß es zumindest anteilig, insb. überwiegend oder vollständig, aus einem Material besteht - beispielsweise einem der vorgenannten üblichen Meßrohrmaterialien -, das eine geringere magnetische Leitfähigkeit aufweist, als ein Material, aus dem der Gegenschwinger zumindest überwiegend oder auch gänzlich besteht. Im besonderen ist ferner vorgesehen, das der Gegenschwinger 20 zumindest anteilig, insb. überwiegend oder vollständig, aus einem magnetisch leitfähigem Material besteht. Vorzugsweise ist der Gegenschwinger dabei zumindest anteilig, insb. überwiegend oder vollständig, aus einem magnetisch leitfähigem Material hergestellt, das eine relative Permeabilität von zumindest 10, insb. mehr als 100, aufweist, wie etwa einem Automatenstahl oder einem Baustahl. Solche Stähle sind dem Fachmann beispielsweise auch unter der Bezeichnung St37, St 38 oder St 53 bekannt.

Im Betrieb des Meßwandlers wird das Meßrohr 10 mittels der dafür im Betrieb von einem elektrischen Treibersignal gespeisten Erregeranordnung 40 - wie bereits mehrfach erwähnt - zumindest zeitweise zu lateralen Biegeschwingungen in der gedachten Primär-Schwingungsebene XZ, insb. im Bereich einer natürlichen Resonanzfrequenz eines entsprechenden natürlichen Schwingungsmodes, so angeregt, daß es sich in diesem sogenannten Nutzmode zumindest anteilig, insb. überwiegend, gemäß einer natürlichen ersten Eigenschwingungsform ausbiegt. Die Biegeschwingungen im Nutzmode sind dabei im wesentlichen transversal zu einer mit der Längsachse L im wesentlichen parallelen, insb. koinzidierenden, Biegeschwingungsachse ausgerichtet, die die beiden Kopplungszonen 11#, 12# imaginär miteinander verbindet. Nach einer Ausgestaltung der Erfindung ist hierbei ferner vorgesehen, daß das Meßrohr im Betrieb mittels der Erregeranordnung zumindest zeitweise derart angeregt ist, daß es überwiegend oder ausschließlich in der gedachten Primär-Schwingungsebene oszilliert.

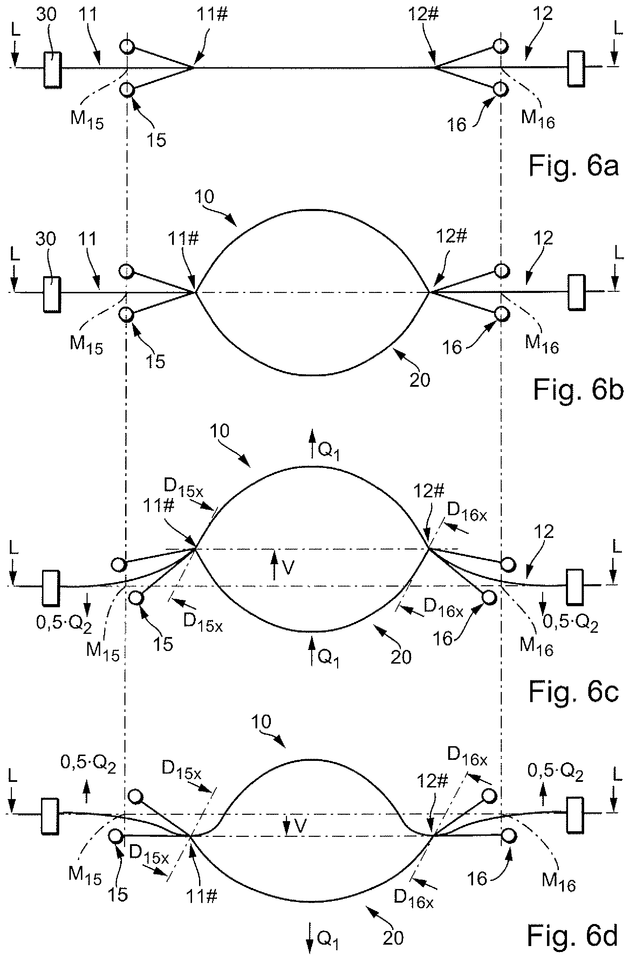

Nach einer weiteren Ausgestaltung der Erfindung, wird das Meßrohr 10 mittels der entsprechend gespeisten Erregeranordnung 40 dabei mit einer Schwingungsfrequenz, f_{exc}, angeregt, die möglichst genau einer natürlichen Resonanzfrequenz des sogenannten *f1*-Eigenmodes des Meßrohrs 10 entspricht, also einem symmetrischen Eigenmode bei dem, wie in Fign. 6 b bis 6d schematisch dargestellt, das vibrierende, jedoch nicht vom Medium durchströmte Meßrohr 10 bezüglich einer zur Längsachse L senkrechten Mittelachse im wesentlichen symmetrisch ausgebogen wird und dabei im wesentlichen einen einzigen Schwingungsbauch aufweist, vgl. hierzu beispielsweise auch eingangs erwähnten US-A 2007/0119265, US-A 2007/0119264, US-B 66 91 583, oder US-B 68 40 109. Gleichermaßen wird auch der Gegenschwinger 20, wie in Fig. 5b schematisch dargestellt, im Betrieb des Meßwandlers ebenfalls zu Biegeschwingungen angeregt, die im wesentlichen koplanar, jedoch im wesentlichen gegenphasig zu den Biegeschwingungen des Meßrohrs 10 ausgebildet sind. Somit oszillieren Meßrohr 10 und Gegenschwinger 20 im Betrieb also zumindest zeitweise und/oder anteilig lateral in einem Nutzmode, in dem sie gemeinsam im wesentlichen koplanare Biegeschwingungen in der gedachten Primär-Schwingungsebene XZ ausführen.

Für den Fall, daß das Medium in der Rohrleitung strömt und somit der Massedurchfluß m von Null verschieden ist, werden mittels des in vorgenannter Weise vibrierenden Meßrohrs 10 im hindurchströmenden Medium Corioliskräfte induziert. Diese wiederum wirken auf das Meßrohr 10 zurück und bewirken so eine zusätzliche, sensorisch erfaßbare - hier jedoch nicht dargestellte - Verformung des Meßrohrs 10 gemäß einer natürlichen zweiten Eigenschwingungsform, die dem angeregten Nutzmode im wesentlich koplanar überlagert ist. Folglich schwingt das Meßrohr auch im Coriolis-Mode im wesentlichen entlang der gedachten Primär-Schwingungsebene XZ. Die momentane Ausprägung der Verformung des Meßrohrs 10 ist dabei, insb. hinsichtlich ihrer Amplituden, auch vom momentanen Massedurchfluß *m* abhängig. Als zweite Eigenschwingungsform, dem sogenannten Coriolismode, kann, wie bei derartigen Meßwandlern üblich, z.B. die Eigenschwingungsform des anti-symmetrischen *f*2-Eigenmodes, also jene mit zwei Schwingungsbäuchen und/oder die Eigenschwingungsform des anti-symmetrischen *f*4-Eigenmodes mit vier Schwingungsbäuchen dienen. Gemäß einer Ausgestaltung der Erfindung sind ferner Meßrohr 10 und Gegenschwinger 20 so dimensioniert, daß das leere Meßrohr 10 eine niedrigste natürliche Eigenfrequenz, f₁₀, aufweist, die größer oder etwa gleich einer niedrigsten natürlichen Eigenfrequenz, f₂₀, des Gegenschwingers 20 ist. Im besonderen sind Meßrohr 10 und Gegenschwinger 20 dabei so dimensioniert, daß das mit Wasser befüllte Meßrohr 10 eine niedrigste natürliche Eigenfrequenz, f_{10,H2O,} aufweist, die mindestens gleich einer niedrigsten natürlichen Eigenfrequenz, f₂₀, des Gegenschwingers 20 ist. Gemäß einer weiteren Ausgestaltung der Erfindung ist ferner vorgesehen, Meßrohr 10 und Gegenschwinger 20 hinsichtlich ihrer Schwingungseigenschaften so aufeinander abzustimmen, daß eine niedrigste natürliche Eigenfrequenz, f_{10, H2O} Meßrohrs 10 auch dann mindestens einem 1,1-fachen einer niedrigsten natürlichen Eigenfrequenz, f₂₀, des Gegenschwingers 20 entspricht, wenn es vollständig mit Wasser befüllt ist. Bei einem Meßrohr aus Titan mit einer Nennweite DN von etwa 55 mm, einer Länge, L₁₀, von etwa 570 mm und einer Wandstärke von etwa 2,5 mm würde eine natürliche Resonanzfrequenz, f_{10, Luft}, des *f1*-Eigenmodes des leeren Meßrohrs etwa bei 550 Hz liegen, während eine natürliche Resonanzfrequenz, f₁₀, _{H2O}, des *f1*-Eigenmodes des mit Wasser befüllten Meßrohrs etwa 450 Hz betragen würde.

Nach einer Weiterbildung der Erfindung, führt das Meßrohr 10 ferner, insb. auch in Anlehnung an den in der US-B 68 40 109 gezeigten Meßwandler, im Betrieb zumindest zeitweise, insb. zeitgleich zu den vorgenannten Biegeschwingungen, Torsionsschwingungen um eine mit der Längsachse L bzw. der vorgenannten Biegeschwingungsachse im wesentlichen parallelen Torsionsschwingungsachse aus. Torsionsschwingungsachse, Biegeschwingungsachse wie auch die Längsachse L können, wie bei derartigen Meßwandlern durchaus üblich, im wesentlichen koinzident sein. Für das oben beschriebene Meßrohr 10 würde sich beispielsweise eine niedrigste natürliche Resonanzfrequenz für die Torsionsschwingungen im Bereich von etwa 750 Hz ergeben.

Wie bereits erwähnt, besteht bei Meßwandlern der vorgenannten Art, insb. bei solchen mit einem nichtmagnetischen Meßrohr und einem im Vergleich dazu eher magnetischen Gegenschwinger ein besonderes Problem darin, daß der gleichermaßen magnetische Anker und/oder Magnetbecher die Felddichte von allfällig in den Meßwandler von extern eingekoppelte und diesen im Bereich der Schwingungssensoren querende Magnetfelder B̅, wie etwa das Erdmagnetfeld, zeitlich variiert, wodurch Störspannungen induziert und dem eigentlichen Schwingungsmeßsignal überlagert werden können. Zur Verminderung solcher Störungen ist beim erfindungsgemäßen Meßwandler daher ferner vorgesehen, in die sich vom Becherboden 51c' aus - im wesentlichen in Richtung der koplanaren Schwingungen von Meßrohr 10 und Gegenschwinger 20 - erstreckende -, beispielsweise im wesentlichen kreiszylindrisch und/oder rohrförmig ausgebildete, Becherwand 51c" des Magnetbechers wenigstens einen Schlitz 511c" einzuformen.

Gemäß einer weiteren Ausgestaltung der Erfindung ist der wenigstens eine Schlitz 511c" im Magnetbecher 51c zumindest abschnittsweise, insb. überwiegend oder vollständig, im wesentlichen gerade ausgebildet und/oder so geformt, daß er sich innerhalb der Becherwand 51c" zumindest abschnittsweise im wesentlichen in Richtung lateraler, z.B. auch koplanarer, Biegeschwingungen von Meßrohr 10 und Gegenschwinger 20, insb. in der gedachten Primär-Schwingungsebene XZ, erstreckt. Alternativ oder in Ergänzung dazu kann der wenigstens eine Schlitz 511c" innerhalb der Becherwand 51c" aber auch zumindest abschnittsweise schräg und/oder helixförmig verlaufen. Unbeachtlich der tatsächlichen Form und/oder Länge des wenigstens einen Schlitzes 511c" innerhalb der Becherwand 51c" kann grundsätzlich davon ausgegangen werden, daß es hinsichtlich der Steifigkeit des Magnetbechers insgesamt von Vorteil ist den Schlitz möglichst schmal auszubilden. Dies umso mehr, als die Breite des Schlitzes 511c" tatsächlich nur geringen Einfluß auf die angestrebte Wirksamkeit der Störungsunterdrückung nimmt. Dem Rechnung tragend ist nach einer weiteren Ausgestaltung der Erfindung der wenigstens eine Schlitz 511c" so geformt, daß er einen größte Breite aufweist die kleiner als 1 mm ist.

Gemäß einer weiteren Ausgestaltung der Erfindung sind Dauermagnet 51b und der wenigstens eine innerhalb der Becherwand verlaufende Schlitz 511c" so geformt und relativ zueinander ausgerichtet, daß beide zumindest abschnittsweise, insb. überwiegend oder gänzlich, zueinander im wesentlichen parallel verlaufen.

Nach einer anderen Ausgestaltung der Erfindung ist der wenigstens eine innerhalb der Becherwand 51c" verlaufende Schlitz 511c" so geformt, daß er sich bis zu einem - hier im wesentlich dem Gegenschwinger 20 zugewandten - freien Rand 51c'" des Magnetbechers 51c erstreckt. Hierbei kann es zudem von besonderem Vorteil sein, den wenigstens einen Schlitz 511c" des weiteren so auszubilden, daß er, ausgehend von nämlichen Rand des Magnetbechers 51c, sich entlang der Becherwand 51c" zumindest bis hin zum Becherboden 51c' erstreckt.

Alternativ oder in Ergänzung zu den vorgenannten Ausgestaltungen ist gemäß einer weiteren Ausgestaltung der Erfindung vorgesehen, daß - wie in den Fig. 7b auch der Becherboden 51c' geschlitzt ist. Im besonderen ist dabei der wenigstens eine innerhalb der Becherwand 511c" verlaufende Schlitz 511c" in der Weise verlängert, daß er sich zumindest bis zum Becherboden 51c' erstreckt, oder daß er sich gegebenenfalls zumindest abschnittsweise auch entlang des Becherbodens 51c' erstreckt, beispielsweise wie in Fig. 7b schematisch dargestellt, in Richtung eines Radius des Becherbodens 51c'. Zudem kann die Wirkung des wenigstens einen in den Becherboden eingeformten Schlitzes dadurch weiter verbessert werden, daß dieser, wie in Fig. 7b schematisch dargestellt, abschnittsweise aufgeweitet ist, beispielsweise inform einer entsprechenden Bohrung im Becherboden.

Obwohl bereits jeweils mittels einem einzigen entlang der Becherwand 51c" verlaufenden Schlitzes eine signifikante Verbesserung der Nullpunktstabilität des jeweiligen Meßwandlers erzielt werden kann, konnte, wie bereits erwähnt, festegestellt werden, daß der Einfluß von extern eingekoppelten, die Messung störender Magnetfelder B̅ insgesamt umso geringer ausfällt, je mehr Schlitze im Magnetbecher eingebracht sind. Gemäß einer Weiterbildung der Erfindung ist zur weiteren Verbesserung der Störungsunterdrückung daher ferner vorgesehen, daß der Magnetbecher nicht nur einen einzigen Schlitz, sondern, wie auch in den Fign. 7a und 7b schematisch dargestellt, wenigstens zwei oder mehr solcher, beispielsweise zumindest innerhalb der Becherwand zueinander im wesentlichen parallel verlaufende und/oder im wesentlichen uniforme, Schlitze 511c", 512c", 513c", 514c" aufweist. Wie zuvor am Beispiel eines Schlitzes erläutert, können auch bei einer Vielzahl von Schlitzen im Magnetbecher 51c des Schwingungssensors 51 zwei oder mehrere solcher Schlitze innerhalb des Becherbodens 51c' eingeformt, beispielsweise wiederum im wesentlichen radial verlaufend, und/oder im wesentlichen uniform ausgebildet sein. Es sei an dieser Stelle allerdings ferner darauf hingewiesen, daß die Anzahl der verwendeten Schlitze zumindest hinsichtlich einer nach wie vor ausreichenden Homogeniserung und geeigneter Führung des für die eigentliche Schwingungsmessung erforderlichen Magnetfelds des Dauermagneten wiederum sinnvoll zu begrenzen ist. Zur Erhöhung der Vibrationsfestigkeit und der Steifigkeit des ein- oder mehrfach geschlitzten Magnetbechers und damit einhergehend zur Vermeidung unerwünschter Eigenvibrationen desselben kann es zudem von Vorteil sein, den Magnetbecher oder zumindest geschlitze Abschnitte davon ganz oder teilweise in elektrisch nicht leitfähige Keramik und/oder elektrisch nicht leitfähigen Kunststoff, wie etwa einem Epoxidharz, einzubetten und/oder die Schlitze zumindest teilweise damit auszufüllen.

Alternativ oder in Ergänzung zur vorgenannten Mehrfachschlitzung des Magnetbechers kann eine weitere Verbesserung der Störungsunterdrückung auch dadurch erzielt werden, daß, wie auch in der Fig. 7a angedeutet, zusätzlich zum Magnetbecher 51c auch der Dauermagnet 51b zumindest abschnittsweise geschlitzt ist. Nach einer weiteren Ausgestaltung der Erfindung weist zusätzlich zum Magnetbecher auch der Dauermagnet 51b wenigstens einen, insb. sich zumindest abschnittsweise in Richtung der im wesentlichen koplanaren Schwingungen von Meßrohr 10 und Gegenschwinger 20 erstreckenden, Schlitz 511b auf. Dieser Schlitz 511b kann beispielsweise so ausgebildet sein, daß er sich bis zu einem nicht mit dem Meßrohr 10 verbundenen freien Ende bzw. Rand 51b"" des Dauermagneten 51b erstreckt. Alternativ oder in Ergänzung dazu kann der Dauermagnet 51b des weiteren auch wenigstens zwei, insb. mehre und/oder zueinander im wesentlichen parallel verlaufende und/oder im wesentlichen uniforme, Schlitze 511b, 512b aufweisen.

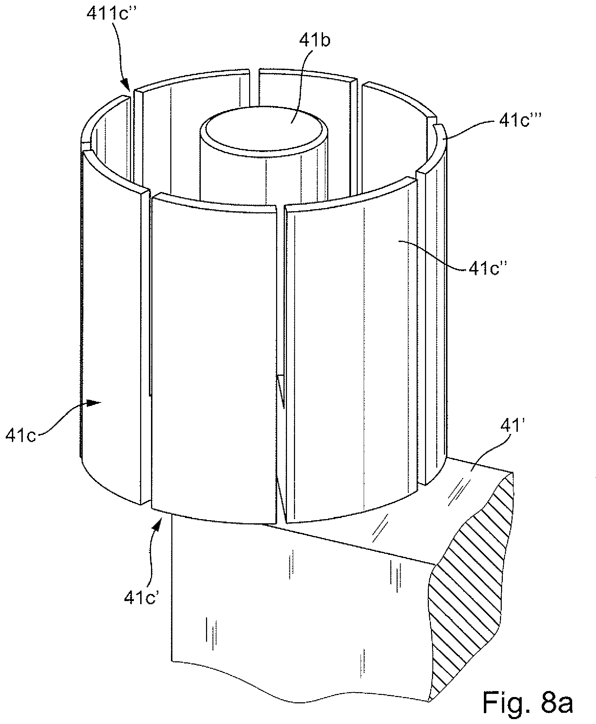

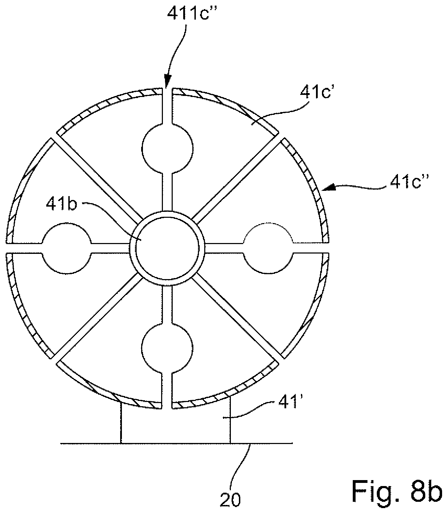

Gemäß einer Weiterbildung der Erfindung ist ferner vorgesehen, den wenigstens einen Schwingungserreger 41 und den wenigstens einen Schwingungssensor 51 nach dem gleichen Wirkprinzip aufzubauen, insb. im wesentlichen einander baugleich auszubilden. Dementsprechend weist gemäß einer weiteren Ausgestaltung der Erfindung ferner auch der wenigstens eine Schwingungserreger 41 weiters einen zumindest anteilig aus magnetisch leitfähigem Material bestehenden Magnetbecher 41c mit einem, beispielsweise am Meßrohr 10 oder - wie aus der Zusammenschau von Fig. 4, 8a und 8b ohne weiteres ersichtlich - am Gegenschwinger 20 befestigten, Becherboden 41c' auf, an dem der mit der Spule 41a magnetisch gekoppelte Dauermagnet 41b gehaltert ist. Alternativ dazu können aber auch, wie bereits erwähnt, die Spule 41a am Gegenschwinger 20 und Magnetbecher 41c mit darin plaziertem Dauermagnet 41b dementsprechend am Meßrohr fixiert sein, so daß dann also die wenigstens eine Spule 41a der Erregeranordnung 40 mit dem Gegenschwinger 20 mechanisch verbunden, insb. starr gekoppelt, ist. Gemäß einer weiteren Ausgestaltung der Erfindung ist zudem vorgesehen, daß auch eine, insb. im wesentlichen kreiszylindrisch und/oder rohrförmig ausgebildete, sich vom Becherboden 41c' des Magnetbechers 41c wenigstens einen Schwingungserregers 41 aus, in Richtung des Gegenschwingers bzw. in Richtung des Meßrohrs, erstreckende Becherwand 41c" des Magnetbechers 41c wenigstens einen, insb. sich zumindest abschnittsweise in Richtung der Schwingungen von Meßrohr 20 und Gegenschwinger 20 und/oder zu einem freien Rand 41c'" des Magnetbechers 41c erstreckenden, Schlitz 411c" aufweist.

Wie sich aus den vorangegangenen Erläuterungen unschwer erkennen läßt, zeichnet sich der erfindungsgemäße Meßwandler u.a. auch dadurch aus, daß im Vergleich zu konventionellen Meßwandlern der in Rede stehenden Art aus konstruktiver bzw. fertigungstechnischer Sicht lediglich geringfügige, einfach realisierbare Modifikationen am Schwingungssensor bzw. an den herkömmlicherweise dafür bereits verwendeten Magnetbechern erforderlich sind, um Schwingungsmeßsignale der vorbeschriebenen Art auf sehr effektive Weise frei von infolge externer Magnetfelder B̅ induzierten Störungen zu halten, insb. auch bei ansonsten konventionellem Aufbau des Meßwandlers und/oder konventioneller Verdrahtung.

## Patentansprüche

1. Meßwandler vom Vibrationstyp für ein in einer Rohrleitung strömendes Medium, welcher Meßwandler umfaßt:
- wenigstens ein, insb. über ein einlaßseitig einmündendes Einlaßrohrstück (11) und über ein auslaßseitig einmündendes Auslaßrohrstück (12) mit der Rohrleitung kommunizierendes, zumindest zeitweise vibrierendes Meßrohr (10) zum Führen von zu messendem Medium,
- einen Gegenschwinger (20), der unter Bildung einer ersten Kopplungszone (11#) einlaßseitig am Meßrohr fixiert ist und der unter Bildung einer zweiten Kopplungszone (12#) auslaßseitig am Meßrohr (10) fixiert ist,
- wenigstens einen, insb. elektrodynamischen, Schwingungserreger (41) zum, insb. differentiellen, Erzeugen von mechanischen Schwingungen zumindest des Meßrohrs (10) relativ zum Gegenschwinger (20), sowie
- wenigstens einen, insb. elektrodynamischen und/oder einlaßseitig am Meßrohr (10) plazierten, ersten Schwingungssensor zum, insb. differentiellen, Erfassen von Schwingungen zumindest des Meßrohrs (10) relativ zum Gegenschwinger (20),
- wobei der wenigstens eine Schwingungssensor (51) eine, insb. am Gegenschwinger (20) fixierte, Spule (51a) sowie einen mit dieser magnetisch gekoppelten Dauermagneten (51b) aufweist, der innerhalb eines zumindest anteilig aus magnetisch leitfähigem Material bestehenden Magnetbecher (51c) plaziert und daselbst an einem, insb. am Meßrohr befestigten, Becherboden (51c') gehaltert ist, und
- wobei eine, insb. im wesentlichen kreiszylindrisch und/oder rohrförmig ausgebildete, sich vom Becherboden aus, insb. im wesentlichen in Richtung des Gegenschwingers, erstreckende Becherwand (51c") des Magnetbechers wenigstens einen, insb. sich zumindest abschnittsweise in Richtung von Schwingungen des Meßrohrs (10) relativ zum Gegenschwinger (20) erstreckenden, Schlitz (511c") aufweist.

2. Meßwandler gemäß einem der vorherigen Ansprüche,
- wobei die Spule des wenigstens einen Schwingungssensors am Gegenschwinger (20) fixiert ist; und/oder
- wobei der Dauermagnet des wenigstens einen Schwingungssensors mechanisch mit dem Meßrohr (10) gekoppelt ist; und/oder
- wobei der Becherboden des Magnetbechers am Meßrohr befestigt ist; und/oder
- wobei der, insb. länglich und/oder stabförmig ausgebildete, Dauermagnet und Spule des wenigstens einen Schwingungssensors zueinander im wesentlichen koaxial verlaufend ausgerichtet sind; und/oder
- wobei Dauermagnet und Becherwand zueinander im wesentlichen koaxial verlaufend ausgerichtet sind; und/oder
- wobei der Dauermagnet des wenigstens einen Schwingungssensors im wesentlichen in einem Zentrum des Becherbodens an diesem fixiert ist.

3. Meßwandler gemäß einem der vorherigen Ansprüche,
- wobei Dauermagnet des wenigstens einen Schwingungssensors und der wenigstens eine Schlitz zumindest abschnittsweise, insb. überwiegend oder gänzlich, zueinander im wesentlichen parallel verlaufend ausgerichtet sind; und/oder
- wobei der wenigstens eine Schlitz zumindest abschnittsweise, insb. überwiegend oder gänzlich, im wesentlichen gerade ist; und/oder
- wobei der wenigstens eine Schlitz sich zumindest bis zum Becherboden erstreckt; und/oder
- wobei auch der Becherboden geschlitzt ist; und/oder
- wobei der wenigstens eine Schlitz sich zumindest abschnittsweise entlang des Becherbodens, insb. in Richtung eines Radius des Becherbodens, erstreckt; und/oder
- wobei auch der Dauermagnet des wenigstens einen Schwingungssensors zumindest abschnittsweise geschlitzt ist; und/oder
- wobei der wenigstens eine Schlitz sich bis zu einem, insb. im wesentlichen dem Gegenschwinger zugewandten, freien Rand (51c"") des Magnetbechers (51c) erstreckt; und/oder
- wobei der wenigstens eine Schlitz ausgehend von dem, insb. dem Gegenschwinger zugewandten, freien Rand des Magnetbechers zumindest bis zum Becherboden sich entlang der Becherwand erstreckt.

4. Meßwandler gemäß einem der vorherigen Ansprüche, wobei der auch der Dauermagnet (51b) des wenigstens einen Schwingungssensors wenigstens einen, insb. sich zumindest abschnittsweise in Richtung von Schwingungen des Meßrohrs (10) relativ zum Gegenschwinger (20) erstreckenden, Schlitz (511b) aufweist.

5. Meßwandler gemäß dem vorherigen Anspruch, wobei der wenigstens eine Schlitz des Dauermagneten (51b) sich bis zu einem im wesentlichen dem Gegenschwinger zugewandten freien Rand (51b"") des Dauermagneten erstreckt.

6. Meßwandler gemäß einem der vorherigen Ansprüche,
- wobei das Meßrohr zumindest anteilig, insb. überwiegend oder vollständig, aus einem Material besteht, das eine geringere magnetische Leitfähigkeit aufweist, als ein Material aus dem der Gegenschwinger zumindest überwiegend besteht; und/oder
- wobei der Gegenschwinger zumindest anteilig, insb. überwiegend oder vollständig, aus einem magnetisch leitfähigen Material besteht; und/oder
- wobei der Gegenschwinger zumindest anteilig, insb. überwiegend oder vollständig, aus einem magnetisch leitfähigen Material mit einer relativen Permeabilität von zumindest 10, insb. mehr als 100, besteht; und/oder
- wobei der Gegenschwinger zumindest anteilig, insb. überwiegend oder vollständig, aus einem Stahl, insb. einem Automatenstahl oder einem Baustahl, besteht; und/oder
- wobei der Dauermagnet des wenigstens einen Schwingungssensors zumindest anteilig, insb. überwiegend oder vollständig, aus einer Seltenenerde-Legierung, insb. AlNiCo, NyFeB, SmCo oder dergleichen, besteht; und/oder
- wobei der Dauermagnet des wenigstens einen Schwingungssensors zumindest anteilig, insb. überwiegend oder vollständig, aus Ferrit besteht; und/oder
- wobei der Magnetbecher des wenigstens einen Schwingungssensors zumindest anteilig, insb. überwiegend oder vollständig, aus einem Stahl, insb. einem Automatenstahl oder einem Baustahl, besteht; und/oder
- wobei der Magnetbecher des wenigstens einen Schwingungssensors zumindest anteilig, insb. überwiegend oder vollständig, aus Ferrit besteht; und/oder
- wobei das Meßrohr zumindest anteilig aus, insb. rostfreiem und/oder austenitisch, Stahl, insb. 316 L, 318 L, oder einer Nickellegierung, insb. Hastelloy, besteht; und/oder
- wobei das Meßrohr zumindest anteilig aus Titan besteht; und/oder
- wobei das Meßrohr zumindest anteilig aus Tantal besteht; und/oder
- wobei das Meßrohr zumindest anteilig aus Zirconium besteht.

7. Meßwandler gemäß einem der vorherigen Ansprüche, wobei das Meßrohr zumindest überwiegend aus, insb. rostfreiem und/oder austenitisch, Stahl, insb. 316 L, 318 L, oder einer Nickellegierung, insb. Hastelloy, oder Titan oder aus Tantal oder aus Zirconium besteht.

8. Meßwandler gemäß einem der vorherigen Ansprüche,
- wobei der Magnetbecher des wenigstens einen Schwingungssensors wenigstens zwei, insb. mehrere und/oder zumindest innerhalb der Becherwand zueinander im wesentlichen parallel verlaufende und/oder im wesentlichen uniforme, Schlitze (511c", 512c", 513c", 514c") aufweist; und/oder
- wobei der Magnetbecher des wenigstens einen Schwingungssensors wenigstens zwei, insb. mehrere, innerhalb des Becherbodens, insb. im wesentlichen radial verlaufende und/oder im wesentlichen uniforme, Schlitze (511c", 512c", 513c", 514c") aufweist; und/oder
- wobei der Dauermagnet des wenigstens einen Schwingungssensors wenigstens zwei, insb. mehrere und/oder zueinander im wesentlichen parallel verlaufende und/oder im wesentlichen uniforme, Schlitze (511b, 512b) aufweist; und/oder
- wobei der wenigstens eine Schwingungserreger im Betrieb zumindest zeitweise von einem Schwingungen des Meßrohrs, insb. laterale Biegeschwingungen des Meßrohrs in der gedachten Primär-Schwingungsebene, bewirkenden elektrischen Treibersignal gespeist ist; und/oder
- wobei der erste Schwingungssensor (51) und der wenigstens eine Schwingungserreger (41) im wesentlichen baugleich sind.

9. Meßwandler gemäß einem der vorherigen Ansprüche, aufweisend wenigstens einen ersten natürlichen Schwingungsmode, in dem zumindest das Meßrohr Biegeschwingungen in einer gedachten Primär-Schwingungsebene (XZ) ausführen kann.

10. Meßwandler nach Anspruch 9, wobei das Meßrohr im Betrieb mittels des wenigstens einen Schwingungserregers zumindest zeitweise derart angeregt ist, daß es zumindest anteilig, insb. überwiegend oder ausschließlich, in der gedachten Primär-Schwingungsebene oszilliert.

11. Meßwandler nach einem der vorherigen Ansprüche, wobei der wenigstens eine Schwingungserreger (41) wenigsten eine, beispielsweise mit dem Gegenschwinger mechanisch verbundene, insb. starr gekoppelte, Spule (41a) umfaßt.

12. Meßwandler nach dem vorherigen Anspruch,
- wobei der wenigstens eine Schwingungserreger weiters einen mit der Spule (41a) magnetisch gekoppelten Dauermagneten (41b) aufweist, der innerhalb eines zumindest anteilig aus magnetisch leitfähigem Material bestehenden Magnetbecher (41c) plaziert und daselbst an einem, insb. am Meßrohr befestigten, Becherboden (41c') gehaltert ist; und/oder
- wobei eine, insb. im wesentlichen kreiszylindrisch und/oder rohrförmig ausgebildete, sich vom Becherboden des wenigstens einen Schwingungserregers aus, insb. in Richtung des Gegenschwingers, erstreckende Becherwand (41c") des Magnetbechers (41c) des wenigstens einen Schwingungserregers wenigstens einen, insb. sich zumindest abschnittsweise in Richtung von Schwingungen des Meßrohrs (10) relativ zum Gegenschwinger (20) erstreckenden, Schlitz (411c") aufweist; und/oder
- wobei die wenigstens eine Spule (41a) des wenigstens einen Schwingungserregers mit dem Gegenschwinger mechanisch verbunden, insb. starr gekoppelt, ist.

13. Meßwandler nach einem der vorherigen Ansprüche,
- wobei das Meßrohr (10) sich mit im wesentlichen gleichbleibendem, insb. kreisringförmiger, Querschnitt zwischen den beiden Kopplungszonen (11#, 12#) erstreckt; und/oder
- wobei das Meßrohr (10) im wesentlichen zylindrisch, insb. kreiszylindrisch, geformt ist; und/oder
- wobei das Meßrohr (10) zumindest teilweise vom Gegenschwinger (20) ummantelt ist; und/oder
- wobei der Gegenschwinger (20) im wesentlichen rohrförmig ist; und/oder
- wobei der Gegenschwinger (20) im wesentlichen gerade ist.

14. Meßwandler nach einem der vorherigen Ansprüche, wobei das Meßrohr (10) im wesentlichen gerade ist.

15. Meßwandler nach dem vorherigen Anspruch,
- wobei auch der Gegenschwinger (20) im wesentlichen rohrförmig und im wesentlichen gerade ist und wobei Meßrohr (10) und Gegenschwinger (20) zueinander im wesentlichen koaxial ausgerichtet sind, insb. derart, daß auch der Gegenschwinger im Betrieb zumindest zeitweise Biegeschwingungen um die Biegeschwingungsachse ausführt; und/oder
- wobei das Meßrohr im Betrieb zumindest zeitweise Torsionsschwingungen um eine mit der Biegeschwingungsachse im wesentlichen parallelen, insb. koinzidenten, Torsionsschwingungsachse ausführt.

16. Meßwandler nach einem der vorherigen Ansprüche,
- weiters umfassend ein, insb. an einem einlaßseitig in das Meßrohr einmündendes Einlaßrohrstück (11), über das daß Meßrohr mit der Rohrleitung kommuniziert, und ein auslaßseitig in das Meßrohr einmündendes Auslaßrohrstück (12), über das daß Meßrohr mit der Rohrleitung kommuniziert, fixiertes Wandlergehäuse (30); und/oder
- weiters umfassend wenigstens einen, insb. zum ersten Schwingungssensor (51) im wesentlichen baugleichen und/oder auslaßseitig am Meßrohr (10) plazierten, zweiten Schwingungssensor (52).

17. Verwendung eines Meßwandlers gemäß einem der vorherigen Ansprüche in einem In-Line-Meßgerät zum Messen und/oder Überwachen wenigstens eines Parameters, insb. eines Massendurchflusse, m, einer Dichte, p, und/oder einer Viskosität, *η*, eines in einer Rohrleitung strömenden Mediums, insb. einem Coriolis-Massendurchflußmeßgerät, einem Dichtemeßgerät, einem Viskositätsmeßgerät oder dergleichen.

## Claims

1. Vibronic-type transducer for a medium flowing through a pipe, said transducer comprising:
- at least one measuring tube (10), which vibrates at least temporarily, communicating with the pipe particularly by means of an inlet pipe segment (11) which enters into the inlet side and via an outlet pipe segment (12) which enters into the outlet side (12), said measuring tube being designed to conduct medium to be measured,
- a counter-vibration mechanism (20), which is fixed on the measuring tube (10) on the inlet side forming a first coupling zone (11#) and which is fixed on the measuring tube (10) on the outlet side forming a second coupling zone (12#),
- at least a vibration exciter (41), particularly electrodynamic, designed to generate mechanical vibrations, particularly in a differential manner, at least of the measuring tube (10) in relation to the counter-vibration mechanism (20), as well as
- at least a first vibration sensor, particularly electrodynamic and/or located on the measuring tube (10) on the inlet side, said vibration sensor being designed to capture, particularly in a differential manner, vibrations at least of the measuring tube (10) in relation to the counter-vibration mechanism (20),
-- wherein the at least one vibration sensor (51) has a coil (51a), particularly fixed on the counter-vibration mechanism (20), and a permanent magnet (51b) magnetically coupled with said coil, wherein said magnet is located inside a magnetic cup (51c), which consists at least partially of a magnetically conductive material, and which is held itself on a cup base (51c'), particularly one that is secured on the measuring tube, and
-- wherein a wall (51c") of the magnetic cup, particularly one that is essentially circular cylindrical and/or tubular, extends from the base of the cup, particularly essentially in the direction of the counter-vibration mechanism and has a slot (511c") which particularly extends at least in part in the direction of the vibrations of the measuring tube (10) in relation to the counter-vibration mechanism (20).

2. Transducer as claimed in one of the previous claims,
- wherein the coil of the at least one vibration sensor is fixed on the counter-vibration mechanism (20); and/or
- wherein the permanent magnet of the at least one vibration sensor is mechanically coupled with the measuring tube (10); and/or
- wherein the cup base of the magnetic cup is fixed on the measuring tube;
and/or
- wherein the permanent magnet, particularly designed in an elongated or rod-like manner, and the coil of the at least one vibration sensor are essentially coaxial in relation to one another; and/or
- wherein the permanent magnet and the cup wall are essentially coaxial in relation to one another; and/or
- wherein the permanent magnet of the at least one vibration sensor is fixed on the base of the cup, essentially in its center.

3. Transducer as claimed in one of the previous claims,
- wherein the permanent magnet of the at least one vibration sensor and the at least one slot are at least partially, particularly primarily or entirely, aligned such that they are essentially parallel to one another; and/or
- wherein the at least one slot is essentially straight, at least partially, particularly primarily or completely; and/or
- wherein the at least one slot extends at least as far as the cup base; and/or
- wherein the cup base is also slotted; and/or
- wherein the at least one slot extends at least partially along the cup base, particularly in the direction of a radius of the cup base; and/or
- wherein the permanent magnet of the at least one vibration sensor is also at least partially slotted; and/or
- wherein the at least one slot extends as far as a free edge (51c"") of the magnetic cup (51c), said edge essentially facing toward the counter-vibration mechanism; and/or
- wherein the at least one slot extends along the cup wall, starting from the free edge of the magnetic cup, particularly facing towards the counter-vibration mechanism, at least as far as the cup base.

4. Transducer as claimed in one of the previous claim, wherein the permanent magnet (51b) of the at least one vibration sensor also has at least one slot (511b), particularly extending at least partially in the direction of vibrations of the measuring tube (10) in relation to the counter-vibration mechanism (20).

5. Transducer as claimed in the previous claim, wherein the at least one slot of the permanent magnet (51b) extends as far as a free edge (51b"") of the permanent magnet, essentially facing towards the counter-vibration mechanism.

6. Transducer as claimed in one of the previous claims,
- wherein the measuring tube is made, at least in part, particularly mainly or completely, from a material with a lower magnetic conductivity than a material from which the counter-vibration mechanism is at least primarily made; and/or
- wherein the counter-vibration mechanism is made, at least in part, particularly mainly or completely, from a magnetically conductive material; and/or
- wherein the counter-vibration mechanism is made, at least in part, particularly mainly or completely, from a magnetically conductive material with a relative permeability of at least 10, particularly more than 100; and/or
- wherein the counter-vibration mechanism is made, at least in part, particularly mainly or completely, from a steel, particularly a machining steel or a structural steel; and/or
- wherein the permanent magnet of the at least one vibration sensor is made, at least in part, particularly mainly or completely, from a rare earth alloy, particularly AlNiCo, NyFeB, SmCo or similar; and/or
- wherein the permanent magnet of the at least one vibration sensor is made, at least in part, particularly mainly or completely, from ferrite; and/or
- wherein the magnetic cup of the at least one vibration sensor is made, at least in part, particularly mainly or completely, from a steel, particularly a machining steel or a structural steel; and/or
- wherein the magnetic cup of the at least one vibration sensor is made, at least in part, particularly mainly or completely, from ferrite; and/or
- wherein the measuring tube is made at least in part from a steel, particularly a stainless and/or austenitic steel, particularly 316 L, 318 L, or a nickel alloy, particularly Hastelloy; and/or
- wherein the measuring tube is made at least in part from titanium; and/or
- wherein the measuring tube is made at least in part from tantalum; and/or
- wherein the measuring tube is made at least in part from zirconium;

7. Transducer as claimed in one or more of the previous claims, wherein the measuring tube is at least mainly made from steel, particularly stainless and/or austenitic steel, particularly 316 L, 318 L, or a nickel alloy, particularly Hastelloy, or titanium or from tantalum or from zirconium.

8. Transducer as claimed in one of the previous claims,
- wherein the magnetic cup of the at least one vibration sensor has at least two slots (511c", 512c", 513c", 514c"), particularly multiple slots, and/or slots that are essentially parallel to one another and/or essentially uniform at least in the interior of the cup wall; and/or
- wherein the magnetic cup of the at least one vibration sensor has at least two slots (511c", 512c", 513c", 514c"), particularly multiple slots, in the cup base, particularly slots that essentially extend in a radial manner and/or are essentially uniform; and/or
- wherein the permanent magnet of the at least one vibration sensor has at least two slots (511b, 512b), particularly multiple slots, and/or slots that are essentially parallel and/or essentially uniform; and/or
- wherein, during operation, the at least one vibration exciter is fed at least temporarily by an electrical driver signal that causes vibrations of the measuring tube, particularly lateral flexural vibrations of the measuring tube on the imaginary primary vibration plane; and/or
- wherein the first vibration sensor (51) and the at least one vibration exciter (41) are essentially identical in design.

9. Transducer as claimed in one of the previous claims featuring at least a first natural vibration mode in which at least the measuring tube can produce flexural vibrations on an imaginary primary vibration plane (XZ).

10. Transducer as claimed in Claim 9, wherein, during operation, the measuring tube is excited by the at least one vibration exciter at least temporarily in such a way that it oscillates at least in part, particularly primarily or exclusively, on the imaginary primary vibration plane.

11. Transducer as claimed in one of the previous claims, wherein the at least one vibration exciter (41) comprises at least one coil (41a), which is mechanically connected, for example, with the counter-vibration mechanism, particularly in a rigid manner.

12. Transducer as claimed in the previous claim,
- wherein the at least one vibration exciter further comprises a permanent magnet (41b) that is magnetically coupled with the coil (41a), wherein said magnet is located in a magnetic cup (41c) made at least partially from magnetic conductive material and which is held on a cup base (41c'), particularly one secured on the measuring tube; and/or
- wherein a wall (41c") of the magnetic cup (41c) of the at least one vibration exciter that is essentially circular cylindrical and/or tubular extends from the cup base of the at least one vibration exciter, particularly in the direction of the counter-vibration mechanism, has at least one slot (411c") that particularly extends at least partially in the direction of vibrations of the measuring tube (10) in relation to the counter-vibration mechanism (20); and/or
- wherein the at least one coil (41a) of the at least one vibration exciter is mechanically connected to the counter-vibration mechanism, particularly in a rigid manner.

13. Transducer as claimed in one of the previous claims,
- wherein the measuring tube (10) extends with an essentially constant cross-section, particularly in the form of a circular ring, between the two coupling zones (11#, 12#); and/or
- wherein the measuring tube (10) is essentially cylindrical in shape, particularly circular cylindrical; and/or
- wherein the measuring tube (10) is at least partially sheathed by the counter-vibration mechanism (20); and/or
- wherein the counter-vibration mechanism (20) is essentially tubular; and/or
- wherein the counter-vibration mechanism (20) is essentially straight;

14. Transducer as claimed in one of the previous claims, wherein the measuring tube (10) is essentially straight.

15. Transducer as claimed in the previous claim,
- wherein the counter-vibration mechanism (20) is also essentially tubular and essentially straight, and wherein the measuring tube (10) and the counter-vibration mechanism (20) are essentially coaxial in relation to one another, particularly in such a way that, during operation, the counter-vibration mechanism also performs, at least temporarily, flexural vibrations around the axis of flexural vibration; and/or
- wherein, during operation, the measuring tube performs, at least temporarily, torsional vibrations around an axis of torsional vibration that is essentially parallel to, particularly coincident with, the axis of flexural vibration.

16. Transducer as claimed in one of the previous claims,
- further comprising a transducer housing (30) which is fixed in particular on an inlet tube segment (11) entering into the measuring tube on the inlet side, via which the measuring tube communicates with the pipe, and an outlet tube segment (12) entering into the measuring tube on the outlet side; and/or
- further comprising at least a second vibration sensor (52), particularly essentially identical in design to the first vibration sensor (51) and/or placed on the measuring tube (10) on the outlet side.

17. Use of a transducer as claimed in one of the previous claims in an in-line measuring device for the purpose of measuring and/or monitoring at least one parameter, particularly a mass flow, m, a density, p, and/or a viscosity, *η*, of medium flowing through a pipe, particularly a Coriolis mass flowmeter, a density measuring device, a viscosity meter or similar.

## Revendications

1. Transducteur du type à vibrations destiné à un produit s'écoulant dans une conduite, lequel transducteur comprend :
- au minimum un tube de mesure (10) vibrant au moins temporairement, notamment communiquant avec la conduite via un segment de tube d'entrée (11) débouchant côté entrée et via un segment de tube de sortie (12) débouchant côté sortie, lequel tube de mesure est destiné à guider le produit à mesurer,
- un contre-vibrateur (20), qui est fixé côté entrée au tube de mesure (10) en formant une première zone de couplage (11#) et qui est fixé côté sortie au tube de mesure (10) en formant une deuxième zone de couplage (12#),
- au moins un excitateur de vibrations (41), notamment électrodynamique, destiné à générer des vibrations mécaniques, notamment différentielles, au moins du tube de mesure (10) par rapport au contre-vibrateur (20), ainsi que
- au moins un premier capteur de vibrations, notamment électrodynamique et/ou disposé côté entrée sur le tube de mesure (10), lequel capteur de vibrations est destiné à la saisie, notamment différentielle, des vibrations au moins du tube de mesure (10) par rapport au contre-vibrateur (20),
-- l'au moins un capteur de vibrations (51) comportant une bobine (51a), notamment fixée sur le contre-vibrateur (20), ainsi qu'un aimant permanent (51b) couplé magnétiquement avec celle-ci, lequel aimant est placé à l'intérieur d'un bol magnétique (51c) constitué au moins partiellement d'un matériau magnétoconducteur, et qui est lui-même maintenu, notamment fixé sur le tube de mesure, au niveau du fond de bol (51c'), et
-- une paroi (51c") du bol magnétique, notamment pour l'essentiel cylindrique circulaire et/ou tubulaire, qui s'étend en partant du fond de bol, notamment pour l'essentiel en direction du contre-vibrateur, étant munie d'au moins une fente (511c") s'étendant notamment au moins partiellement en direction des vibrations du tube de mesure (10) par rapport au contre-vibrateur (20).

2. Transducteur selon l'une des revendications précédentes,
- pour lequel la bobine de l'au moins un capteur de vibrations est fixée sur le contre-vibrateur (20) ; et/ou
- pour lequel l'aimant permanent de l'au moins un capteur de vibrations est couplé mécaniquement avec le tube de mesure (10) ; et/ou
- pour lequel le fond du bol magnétique est fixé sur le tube de mesure ; et/ou
- pour lequel l'aimant permanent, notamment conçu de façon allongée et/ou en forme de tige, et la bobine de l'au moins un capteur de vibrations sont pour l'essentiel coaxiaux ; et/ou
- pour lequel l'aimant permanent et la paroi de bol sont pour l'essentiel coaxiaux ; et/ou
- pour lequel l'aimant permanent de l'au moins un capteur de vibrations est fixé sur le fond de bol, pour l'essentiel en son centre.

3. Transducteur selon l'une des revendications précédentes,
- pour lequel l'aimant permanent de l'au moins un capteur de vibrations et l'au moins une fente sont au moins partiellement pour l'essentiel parallèles l'un par rapport à l'autre, notamment en grande partie ou complètement ; et/ou
- pour lequel l'au moins une fente est au moins partiellement pour l'essentiel droite, notamment en grande partie ou complètement ; et/ou
- pour lequel l'au moins une fente s'étend au moins jusqu'au fond de bol ; et/ou
- pour lequel le fond de bol est également muni de fentes ; et/ou
- pour lequel l'au moins une fente s'étend au minimum partiellement le long du fond de bol, notamment en direction d'un rayon du fond de bol ; et/ou
- pour lequel l'aimant permanent de l'au moins un capteur de vibrations est également muni au minimum partiellement de fentes ; et/ou
- pour lequel l'au moins une fente s'étend jusque vers un bord libre (51 c""), notamment faisant pour l'essentiel face au contre-vibrateur, du bol magnétique (51c) ; et/ou
- pour lequel l'au moins une fente s'étend le long de la paroi de bol, en partant du bord libre, notamment faisant face au contre-vibrateur, du bol magnétique au moins jusqu'au fond de bol.

4. Transducteur selon l'une des revendications précédentes, pour lequel l'aimant permanent (51 b) de l'au moins un capteur de vibrations est également muni d'au moins une fente (511 b) s'étendant notamment au moins partiellement en direction des vibrations du tube de mesure (10) par rapport au contre-vibrateur (20).

5. Transducteur selon la revendication précédente, pour lequel l'au moins une fente de l'aimant permanent (51b) s'étend jusque vers un bord libre (51 b""), pour l'essentiel faisant face au contre-vibrateur, de l'aimant permanent.

6. Transducteur selon l'une des revendications précédentes,
- pour lequel le tube de mesure est constitué, au moins en partie, notamment en grande partie ou intégralement, d'un matériau présentant une conductivité magnétique inférieure à celle d'un matériau avec lequel le contre-vibrateur est au moins en grande partie constitué ; et/ou
- pour lequel le contre-vibrateur est constitué au moins en partie, notamment en grande partie ou intégralement, d'un matériau magnétoconducteur ; et/ou
- pour lequel le contre-vibrateur est constitué au moins en partie, notamment en grande partie ou intégralement, d'un matériau magnétoconducteur avec une perméabilité relative d'au moins 10, notamment de plus de 100 ; et/ou
- pour lequel le contre-vibrateur est constitué au moins en partie, notamment en grande partie ou intégralement, d'un acier, notamment un acier de décolletage ou un acier de construction ; et/ou
- pour lequel l'aimant permanent de l'au moins un capteur de vibrations est constitué au moins en partie, notamment en grande partie ou intégralement, d'un alliage de terre rare, notamment AINiCo, NyFeB, SmCo, etc. ; et/ou
- pour lequel l'aimant permanent de l'au moins un capteur de vibrations est constitué au moins en partie, notamment en grande partie ou intégralement, de ferrite ; et/ou
- pour lequel le bol magnétique de l'au moins un capteur de vibrations est constitué au moins en partie, notamment en grande partie ou intégralement, d'un acier, notamment un acier de décolletage ou un acier de construction ; et/ou
- pour lequel le bol magnétique permanent de l'au moins un capteur de vibrations est constitué au moins en partie, notamment en grande partie ou intégralement, de ferrite ; et/ou
- pour lequel le tube de mesure est constitué au moins en partie d'un acier, notamment inoxydable et/ou austénitique, notamment 316 L, 318 L, ou d'un alliage de nickel, notamment de l'Hastelloy ; et/ou
- pour lequel le tube de mesure est constitué au moins en partie de titane ; et/ou
- pour lequel le tube de mesure est constitué au moins en partie de tantale ; et/ou
- pour lequel le tube de mesure est constitué au moins en partie de zirconium ;

7. Transducteur selon l'une des revendications précédentes, pour lequel le tube de mesure est constitué au moins en grande partie d'acier, notamment inoxydable et/ou austénitique, notamment 316 L, 318 L, ou d'un alliage de nickel, notamment de l'Hastelloy, ou du titane ou du tantale ou du zirconium.

8. Transducteur selon l'une des revendications précédentes,
- pour lequel le bol magnétique de l'au moins un capteur de vibrations est muni d'au moins deux fentes (511c", 512c", 513c", 514c"), notamment de plusieurs fentes, et/ou s'étendant pour l'essentiel parallèlement au moins à l'intérieur de la paroi de bol et/ou pour l'essentiel uniformes ; et/ou
- pour lequel le bol magnétique de l'au moins un capteur de vibrations est muni d'au moins deux fentes (511c", 512c", 513c", 514c"), notamment de plusieurs fentes, et/ou s'étendant, notamment pour l'essentiel radialement, à l'intérieur du fond de bol et/ou pour l'essentiel uniformes ; et/ou
- pour lequel l'aimant permanent de l'au moins un capteur de vibrations est muni d'au moins deux fentes (511b, 512b), notamment de plusieurs fentes, et/ou s'étendant pour l'essentiel parallèlement et/ou pour l'essentiel uniformes ; et/ou
- pour lequel l'au moins un excitateur de vibrations est alimenté, en fonctionnement, par un signal d'attaque électrique provoquant au moins temporairement des vibrations du tube de mesure, notamment des vibrations de flexion latérales du tube de mesure dans le plan de vibration primaire imaginaire ; et/ou
- pour lequel le premier capteur de vibrations (51) et l'au moins un excitateur de vibrations (41) sont pour l'essentiel de conception identique.

9. Transducteur selon l'une des revendications précédentes, présentant au moins un premier mode de vibration naturel, dans lequel au moins le tube de mesure peut exécuter des vibrations de flexion dans un plan de vibration primaire imaginaire (XZ).

10. Transducteur selon la revendication 9, pour lequel le tube de mesure est excité, en fonctionnement, au moyen de l'au moins un excitateur de vibrations, au moins temporairement de telle sorte qu'il oscille au moins en partie, notamment en grande partie ou exclusivement, dans le plan de vibration primaire imaginaire.

11. Transducteur selon l'une des revendications précédentes, pour lequel l'au moins un excitateur de vibrations (41) comprend au minimum une bobine (41a), par exemple reliée mécaniquement avec le contre-vibrateur, notamment couplée de façon rigide.

12. Transducteur selon la revendication précédente,
- pour lequel l'au moins un excitateur de vibrations comprend en outre un aimant permanent (41b) couplé magnétiquement avec la bobine (41a), lequel aimant est placé dans un bol magnétique (41c) au moins partiellement constitué d'un matériau magnétoconducteur, et qui est lui même maintenu sur le fond de bol (41c'), notamment fixé sur le tube de mesure ; et/ou
- pour lequel une paroi (41c") du bol magnétique (41c) de l'au moins un excitateur de vibrations, laquelle paroi est notamment pour l'essentiel cylindrique circulaire et/ou tubulaire et s'étend en partant du fond de bol de l'au moins un excitateur de vibrations, notamment en direction du contre-vibrateur, est munie d'une fente (411c") s'étendant, notamment au moins partiellement en direction des vibrations du tube de mesure (10) par rapport au contre-vibrateur (20) ; et/ou
- pour lequel l'au moins une bobine (41a) de l'au moins un excitateur de vibrations est reliée mécaniquement avec le contre-vibrateur, notamment couplée de façon rigide.

13. Transducteur selon l'une des revendications précédentes,
- pour lequel le tube de mesure (10) s'étend avec une section pour l'essentiel constante, notamment en forme d'anneau de cercle, entre les deux zones de couplage (11#, 12#) ; et/ou
- pour lequel le tube de mesure (10) est formé pour l'essentiel de manière cylindrique, notamment cylindrique circulaire ; et/ou
- pour lequel le tube de mesure (10) est enveloppé au moins en partie par le contre-vibrateur (20) ; et/ou
- pour lequel le contre-vibrateur (20) est pour l'essentiel tubulaire ; et/ou
- pour lequel le contre-vibrateur (20) est pour l'essentiel droit ;

14. Transducteur selon l'une des revendications précédentes, pour lequel le tube de mesure (10) est pour l'essentiel droit.

15. Transducteur selon la revendication précédente,
- pour lequel le contre-vibrateur (20) est également pour l'essentiel tubulaire et pour l'essentiel droit, et pour lequel le tube de mesure (10) et le contre-vibrateur (20) sont pour l'essentiel coaxiaux, notamment de telle sorte que le contre-vibrateur exécute également, en fonctionnement et au moins temporairement, des vibrations de flexion autour de l'axe de vibration de flexion ; et/ou
- pour lequel le tube de mesure exécute, en fonctionnement et au moins temporairement, des vibrations de torsion autour d'un axe de vibration de torsion pour l'essentiel parallèle avec l'axe de vibration de flexion, notamment coïncidant.

16. Transducteur selon l'une des revendications précédentes,
- comprenant en outre un boîtier de transducteur (30) fixé notamment à un segment de tube d'entrée (11) débouchant côté entrée dans le tube de mesure, tube d'entrée via lequel le tube de mesure communique avec la conduite, et à un segment de tube de sortie (12) débouchant côté sortie dans le tube de mesure, tube de sortie via lequel le tube de mesure communique avec la conduite ; et/ou
- comprenant en outre au moins un deuxième capteur de vibrations (52), notamment pour l'essentiel de conception identique au premier capteur de vibrations (51) et/ou placé côté sortie sur le tube de mesure (10).

17. Utilisation d'un transducteur selon l'une des revendications précédentes dans un appareil de mesure en ligne destiné à la mesure et/ou la surveillance d'au moins un paramètre, notamment un débit massique, *m*, une densité, *ρ*, et/ou une viscosité, *η*, d'un produit s'écoulant dans une conduite, notamment un débitmètre massique Coriolis, un densimètre, un viscosimètre, etc.
